# EUROPEAN PATENT APPLICATION

(11) **EP 4 753 340 A1**
(43) Date of publication of application: **03.06.2026**
(21) Application number: 24855746.4
(22) Date of filing: 16.08.2024
(51) Int. Cl.: H04W 52/02

(54) **COMMUNICATION METHOD AND APPARATUS, STORAGE MEDIUM, AND CHIP SYSTEM**

(30) Priority: 21.08.2023 CN 202311057882
(71) Applicant: HUAWEI TECHNOLOGIES CO., LTD., Shenzhen 518129 (CN)
(72) Inventor: ZHAO, Yue, Shenzhen, Guangdong 518129 (CN); GAN, Ming, Shenzhen, Guangdong 518129 (CN); GUO, Yuchen, Shenzhen, Guangdong 518129 (CN)
(74) Representative: Isarpatent
(86) International application number: PCT/CN2024/112866
(87) International publication number: WO 2025/040023

(57) **Abstract**

A communication method and apparatus, a storage medium, and a chip system are provided, and relate to the field of communication technologies. Indication information is added to TWT information, so that a non-AP STA can identify TWT set up between an AP in an OBSS and a non-AP STA associated with the AP. This application is applied to a wireless local area network system supporting a next-generation Wi-Fi protocol (for example, 802.11be, Wi-Fi 7, or EHT) of IEEE 802.11ax, a next-generation Wi-Fi protocol (for example, Wi-Fi 8, UHR, or 11bn) of IEEE 802.11be, Wi-Fi AI, a millimeter wave (mmWave), an ultra-wideband (UWB), or sensing (sensing). In this application, a first AP may send first TWT information. The first TWT information may indicate TWT set up between an AP in an OBSS and a non-AP STA associated with the AP. The first TWT information may carry first indication information, so that the first non-AP STA identifies the TWT set up between the AP in the OBSS and the non-AP STA associated with the AP, to assist the non-AP STA in performing communication based on a TWT mechanism.

## Description

### CROSS-REFERENCE TO RELATED APPLICATIONS

This application claims priority to Chinese Patent Application No. 202311057882.0, filed with the China National Intellectual Property Administration on August 21, 2023 and entitled "COMMUNICATION METHOD AND APPARATUS, STORAGE MEDIUM, AND CHIP SYSTEM", which is incorporated herein by reference in its entirety.

### TECHNICAL FIELD

This application relates to the field of communication technologies, and in particular, to a communication method and apparatus, a storage medium, and a chip system.

### BACKGROUND

A plurality of wireless devices (especially terminal devices) are powered by batteries, and therefore power saving characteristics are significantly important. In the Institute of Electrical and Electronics Engineers (Institute of Electrical and Electronics Engineers, IEEE) 802.11ah, a target wake time (target wake time, TWT) technology is introduced to the Internet of things (Internet of things, IoT) field. A TWT requesting station may be in a doze state in time beyond a TWT service period (service period, SP), to reduce energy consumption.

A communication system may include a plurality of basic service sets (basic service set, BSS). The BSS is a basic component in an 802.11 local area network (local area network, LAN). The BSS includes stations (station, STA) that are in specific coverage and that are connected to each other.

For example, in an infrastructure basic service set (infrastructure BSS), a STA with a special function serves as an access point for all stations in the BSS to access a distributed network (distributed system, DS), and the special station is the access point (access point, AP) of the BSS and is responsible for managing the BSS. When a non-access point station (non-AP STA) needs to access the DS, the non-AP STA needs to associate with the AP and access the DS via the associated AP. Each BSS managed by an AP entity may include at least one non-AP STA, and a plurality of non-AP STAs are associated with the AP entity corresponding to the BSS. TWT or R-TWT may be set up between each AP and a non-AP STA associated with the AP.

### SUMMARY

This application provides a communication method and apparatus, a storage medium, and a chip system. Indication information is added to TWT information, so that a non-AP STA can identify TWT set up between an AP in an overlapping basic service set (overlapping BSS, OBSS) of an AP and a non-AP STA associated with the AP, to assist the non-AP STA in performing communication based on a TWT mechanism.

In a possible implementation of this application, a first AP sends TWT information. TWT indicated by the TWT information is TWT set up between an AP in an OBSS and a non-AP STA associated with the AP, and the TWT information may carry first indication information, so that a first non-AP STA identifies the TWT set up between the AP in the OBSS and the non-AP STA associated with the AP.

In another possible implementation, the first non-AP STA may communicate with the first AP on a primary channel that is switched to during an SP of the TWT set up between the AP in the OBSS and the non-AP STA associated with the AP. Because the primary channel that is switched to may be different from a primary channel in the OBSS, the primary channel that is switched to is less likely to be busy during the SP of the TWT set up between the AP in the OBSS and the non-AP STA associated with the AP. Therefore, the first non-AP STA performs communication on the primary channel that is switched to, to improve communication efficiency.

**According to a first aspect,** an embodiment of this application provides a communication method. The method is applicable to a first non-AP STA. For example, the first non-AP STA may be a non-AP STA device or a unit, module, or chip (system) in the non-AP STA device.

In the method, the first non-AP STA receives first TWT information from a first AP. The first non-AP STA is associated with the first AP, the first TWT information includes first indication information, and the first indication information indicates that TWT indicated by the first TWT information is TWT set up between an AP in an overlapping basic service set OBSS of the first AP and a non-AP STA associated with the AP. The first non-AP STA determines, based on the first indication information, that the TWT indicated by the first TWT information is the TWT set up between the AP in the OBSS and the non-AP STA associated with the AP.

The first TWT information includes the first indication information, so that the first non-AP STA can distinguish the TWT set up between the AP in the OBSS and the non-AP STA associated with the AP, to assist the non-AP STA in performing communication based on a TWT mechanism in this solution.

In a possible implementation, the first TWT information is carried in a first TWT element. The first indication information is carried in a reserved field B7 in a control field of the first TWT element.

In this implementation, the first indication information can occupy the reserved field of the first TWT element. Therefore, the existing TWT element is slightly changed in this implementation, to be better compatible with the conventional technology. In addition, bits of the TWT element are not increased due to the first indication information in this solution, to reduce resource overheads.

In a possible implementation, the first non-AP STA receives second TWT information from the first AP. The second TWT information includes second indication information, and the second indication information indicates that TWT indicated by the second TWT information is TWT set up between the first AP and a non-AP STA associated with the first AP.

The second TWT information includes the second indication information. Therefore, the first non-AP STA can identify whether the TWT indicated by the received TWT information is TWT set up between an AP in a BSS and a non-AP STA associated with the AP, and then the first non-AP STA can communicate with the first AP based on the identified TWT set up between the AP in the BSS and the non-AP STA associated with the AP.

In a possible implementation, the second TWT information is carried in a second TWT element, and the second indication information is carried in a reserved field B7 in a control field of the second TWT element.

In this implementation, the second indication information can occupy the reserved field of the second TWT element. Therefore, the existing TWT element is slightly changed in this implementation, to be better compatible with the conventional technology. In addition, bits of the TWT element are not increased due to the second indication information in this solution, to reduce resource overheads.

In a possible implementation, the first TWT information may include third indication information or fourth indication information.

The third indication information indicates the first non-AP STA to communicate with the first AP on a primary channel that is switched to. The third indication information may further indicate the first AP to communicate with the first non-AP STA on a primary channel that is switched to. In this way, when the first non-AP STA determines that the first TWT information includes the third indication information, regardless of whether a first channel originally serving as a primary channel is in an idle or busy state, the first non-AP STA switches the primary channel, for example, switches the primary channel from the first channel to a second channel, and communicates with the first AP on the second channel serving as the primary channel. The first non-AP STA may determine, based on the third indication information, a condition for switching the primary channel, so that the first AP and the first non-AP STA make a same decision based on the same condition, that is, both the first AP and the first non-AP STA switch the primary channel.

In a possible implementation, the first TWT information is carried in the first TWT element, and the third indication information is carried in a TWT parameter information field of the first TWT element.

The third indication information may be carried in a newly added field in the TWT parameter information field. The third indication information may also be considered as TWT parameter information. Therefore, it is reasonable that the third indication information is carried in the TWT parameter information field, and the third indication information is more compatible with the conventional technology.

In a possible implementation, the fourth indication information indicates the first non-AP STA to communicate with the first AP on a primary channel that is switched to when a state of the first channel is a busy state. The fourth indication information indicates the first AP to communicate with the first non-AP STA on a primary channel that is switched to when a state of the first channel is a busy state.

In a possible implementation, the fourth indication information further indicates the first non-AP STA to communicate with the first AP on the first channel serving as the primary channel when the state of the first channel is an idle state. The fourth indication information further indicates the first AP to communicate with the first non-AP STA on the first channel serving as the primary channel when the state of the first channel is an idle state.

In this way, when the first non-AP STA determines that the first TWT information includes the fourth indication information, the first non-AP STA first detects the first channel originally serving as the primary channel. If the first channel is idle, the first non-AP STA does not need to switch the primary channel. If the first channel is busy, the first non-AP STA switches the primary channel, for example, switches the primary channel from the first channel to the second channel, and communicates with the first AP on the second channel serving as the primary channel. The first non-AP STA may determine, based on the fourth indication information, a condition for switching the primary channel, so that the first AP and the first non-AP STA make a same decision based on the same condition, that is, both the first AP and the first non-AP STA switch or do not switch the primary channel.

In a possible implementation, the first indication information further indicates that the first TWT information includes the third indication information or the fourth indication information. It may also be understood as that when the first TWT information includes the first indication information, it may also be considered that the first TWT information includes the third indication information or the fourth indication information.

In a possible implementation, the first TWT information is carried in the first TWT element. The fourth indication information is carried in the TWT parameter information field of the first TWT element. The fourth indication information may be carried in a newly added field in the TWT parameter information field. The fourth indication information may also be considered as TWT parameter information. Therefore, it is reasonable that the fourth indication information is carried in the TWT parameter information field, and the fourth indication information is more compatible with the conventional technology.

In a possible implementation, the first non-AP STA switches the primary channel from the first channel to the second channel based on the first TWT information, and communicates with the first AP on the second channel serving as the primary channel.

For example, the first non-AP STA communicates with the first AP in the second TWT, and the primary channel is the first channel. In non-second TWT, the first non-AP STA needs to communicate with the first AP based on a conventional solution, that is, the first non-AP STA listens to the primary channel (the first channel). When the first channel is busy, the first non-AP STA backs off. When the first channel is idle, the first non-AP STA communicates with the first AP on the first channel serving as the primary channel. However, the first channel may also be a primary channel of a second AP in the OBSS. The second AP sets up the first TWT with a non-AP STA associated with the second AP. The first channel is more likely to be in a busy state during the SP of the first TWT, and consequently, communication efficiency of the first non-AP STA in the first TWT is low.

In a possible implementation, the first non-AP STA switches the primary channel from the first channel to the second channel during the SP of the first TWT, to reduce a probability that the primary channel is in the busy state. Then, the first non-AP STA performs transmission on the second channel serving as the primary channel during the SP of the first TWT, to improve communication efficiency.

In a possible implementation, start time of switching the primary channel from the first channel to the second channel is start time of an SP of the first TWT or is before start time of an SP of the first TWT. In a possible implementation, completion time of switching the primary channel from the first channel to the second channel is the start time of the SP of the first TWT or is before the start time of the SP of the first TWT.

The start time and/or the completion time of switching the primary channel to the second channel is limited, so that the first AP and the first non-AP STA can complete switching of the primary channel in a short time period before or after the start time of the SP of the first TWT. Therefore, the first AP can communicate with the first non-AP STA on the primary channel that is switched to in a long time period during the SP of the first TWT, to improve communication efficiency.

In a possible implementation, the first non-AP STA switches the primary channel from the second channel to the first channel, and communicates with the first AP on the first channel serving as the primary channel. Start time of switching the primary channel from the second channel to the first channel is end time of the SP of the first TWT or is after end time of the SP of the first TWT. In a possible implementation, completion time of switching the primary channel from the second channel to the first channel is the end time of the SP of the first TWT or is after the end time of the SP of the first TWT.

The start time and/or the completion time of switching the primary channel back to the first channel is limited, so that the first AP and the first non-AP STA can switch the second channel back to the original primary channel in a short time period before or after the end time of the SP of the first TWT. Therefore, the first AP can communicate with the first non-AP STA on the primary channel that is originally configured.

In a possible implementation, the first non-AP STA obtains indication information of the second channel. In this way, the first non-AP STA can determine the primary channel that is switched to based on the obtained indication information of the second channel. The first non-AP STA may obtain the indication information of the second channel through pre-configuration or by receiving an indication from another apparatus.

In a possible implementation, the indication information of the second channel includes a first value and a second value. The first value corresponds to a location of the first channel. A relationship between the first value and the second value indicates a relative location relationship between the first channel and the second channel. Workstations with different bandwidth may have different numbers of the primary channel. In embodiments of this application, a relative location rather than an absolute number of a channel indicates a used channel, to avoid ambiguity and facilitate implementation.

In a possible implementation, the indication information of the second channel is carried in an anchor channel information field of an action frame or a management frame. The first value is carried in a primary channel field in the anchor channel information field. The second value is carried in an anchor channel field in the anchor channel information field. The setting is proper, and is more easily compatible with the conventional technology.

In a possible implementation, the frame used to carry the indication information of the second channel further includes information indicating that the indication information of the second channel is present in the frame. In this way, the first non-AP STA may determine, based on the information, whether the indication information of the second channel is present in the frame; and when the indication information of the second channel is not present, may not parse the field, of the frame, carrying the indication information of the second channel, to reduce workload of the first non-AP STA, and reduce power consumption of the first non-AP STA.

In a possible implementation, the first non-AP STA sends, to the first AP, information indicating to request to enter a first mode; or the first non-AP STA receives, from the first AP, the information indicating to request to enter the first mode. The first mode indicates that a non-AP STA and/or an AP in the first mode is allowed to switch the primary channel based on the first TWT information. It may also be understood that the first mode includes some rules, and the non-AP STA and/or the AP that enter the first mode need to comply with the rules of the first mode. The rules of the first mode may include: allowing the non-AP STA and/or the AP to switch the primary channel when the primary channel needs to be switched. For related content of primary channel switching, refer to the foregoing descriptions. Details are not described again.

Because the information indicating to request to enter the first mode may be transmitted between the first non-AP STA and the first AP, the first non-AP STA and the first AP may negotiate whether to enter the first mode. After the two parties agree to enter the first mode, the two parties may be allowed to switch the primary channel when the primary channel needs to be switched. If the two parties do not enter the first mode, the two parties may not be restricted by the rules of the first mode. For example, the two parties may not be allowed to switch the primary channel. For example, the two parties are not allowed to switch the primary channel in an SP phase of the first TWT information.

In a possible implementation, the first non-AP STA sends, to the first AP, information indicating a success of entering the first mode; or the first non-AP STA receives, from the first AP, the information indicating a success of entering the first mode. Because the information indicating a success of entering the first mode may be transmitted between the first non-AP STA and the first AP, the first non-AP STA or the first AP may acknowledge, based on the signaling, whether the other party successfully enters the first mode.

In a possible implementation, the first non-AP STA sends, to the first AP, information indicating to end the first mode; or the first non-AP STA receives, from the first AP, the information indicating to end the first mode. Because the information indicating to end the first mode may be transmitted between the first non-AP STA and the first AP, the first non-AP STA or the first AP may exit the first mode based on the signaling.

**According to a second aspect,** an embodiment of this application provides a communication method. The method is applicable to a first AP. For example, the first AP may be an AP device or a unit, module, or chip (system) in the AP device.

In the method, the first AP obtains first TWT information. A first non-AP STA is associated with the first AP, the first TWT information includes first indication information, and the first indication information indicates that TWT indicated by the first TWT information is TWT set up between an AP in an overlapping basic service set OBSS of the first AP and a non-AP STA associated with the AP. The first AP sends the first TWT information.

In a possible implementation, the first AP sends second TWT information.

In a possible implementation, the first AP switches a primary channel from a first channel to a second channel based on the first TWT information, and communicates with the first non-AP STA on the second channel serving as the primary channel. Start time of switching the primary channel from the first channel to the second channel is start time of an SP of the first TWT or is before start time of an SP of the first TWT. In a possible implementation, completion time of switching the primary channel from the first channel to the second channel is the start time of the SP of the first TWT or is before the start time of the SP of the first TWT.

In a possible implementation, the first AP switches the primary channel from the first channel to the second channel based on the first TWT information, and communicates with the first non-AP STA on the second channel serving as the primary channel. Then, the first AP switches the primary channel from the second channel to the first channel, and communicates with the first non-AP STA on the first channel serving as the primary channel. Start time of switching the primary channel from the second channel to the first channel is end time of the SP of the first TWT or is after end time of the SP of the first TWT. In a possible implementation, completion time of switching the primary channel from the second channel to the first channel is the end time of the SP of the first TWT or is after the end time of the SP of the first TWT.

In a possible implementation, the first AP sends indication information of the second channel.

In a possible implementation, the first AP sends information indicating to request to enter a first mode; or the first AP receives the information indicating to request to enter the first mode. The first mode indicates that a non-AP STA and/or an AP in the first mode is allowed to switch the primary channel based on the first TWT information.

In a possible implementation, the first AP sends information indicating a success of entering the first mode; or the first AP receives the information indicating a success of entering the first mode.

In a possible implementation, the first AP sends information indicating to end the first mode; or the first AP receives the information indicating to end the first mode.

For related content and beneficial effect of information such as the first indication information, second indication information, third indication information, fourth indication information, the indication information of the second channel, and information indicating that the indication information of the second channel is present in a frame, and related descriptions and beneficial effect of the foregoing content, refer to the descriptions of the first aspect. Details are not described again.

**According to a third aspect,** an embodiment of this application provides a communication method. The method is applicable to a first non-AP STA. For example, the first non-AP STA may be a non-AP STA device or a unit, module, or chip (system) in the non-AP STA device.

In the method, the first non-AP STA receives indication information of a second channel. The first non-AP STA switches a primary channel from a first channel to the second channel, and communicates with a first AP on the second channel serving as the primary channel.

In this way, the first non-AP STA can determine the primary channel that is switched to based on the obtained indication information of the second channel. The first non-AP STA may obtain the indication information of the second channel through pre-configuration or by receiving an indication from another apparatus.

In a possible implementation, the indication information of the second channel includes a first value and a second value. The first value corresponds to a location of the first channel. A relationship between the first value and the second value indicates a relative location relationship between the first channel and the second channel.

For related content and beneficial effect of information such as the indication information of the second channel and information indicating that the indication information of the second channel is present in a frame, and related descriptions and beneficial effect of the foregoing content, refer to the descriptions of the first aspect. Details are not described again.

**According to a fourth aspect,** an embodiment of this application provides a communication method. The method is applicable to a first AP. For example, the first AP may be an AP device or a unit, module, or chip (system) in the AP device.

In the method, the first AP sends indication information of a second channel. The first AP switches a primary channel from a first channel to the second channel, and communicates with a first non-AP STA on the second channel serving as the primary channel.

The indication information of the second channel includes a first value and a second value. The first value corresponds to a location of the first channel. A relationship between the first value and the second value indicates a relative location relationship between the first channel and the second channel.

For related content and beneficial effect of information such as the indication information of the second channel and information indicating that the indication information of the second channel is present in a frame, and related descriptions and beneficial effect of the foregoing content, refer to the descriptions of the first aspect. Details are not described again.

**According to a fifth aspect,** an embodiment of this application provides a communication method. The method is applicable to a first non-AP STA. For example, the first non-AP STA may be a non-AP STA device or a unit, module, or chip (system) in the non-AP STA device.

In the method, the first non-AP STA sends, to a first AP, information indicating to request to enter a first mode; or the first non-AP STA receives, from the first AP, the information indicating to request to enter the first mode. The first mode indicates that a non-AP STA and/or an AP in the first mode is allowed to switch a primary channel based on first TWT information.

Because the information indicating to request to enter the first mode may be transmitted between the first non-AP STA and the first AP, the first non-AP STA and the first AP may negotiate whether to enter the first mode. After the two parties agree to enter the first mode, the two parties may be allowed to switch the primary channel when the primary channel needs to be switched.

In a possible implementation, the first non-AP STA sends, to the first AP, information indicating a success of entering the first mode; or the first non-AP STA receives, from the first AP, the information indicating a success of entering the first mode.

In a possible implementation, the first non-AP STA sends, to the first AP, information indicating to end the first mode; or the first non-AP STA receives, from the first AP, the information indicating to end the first mode.

For related descriptions and beneficial effect, refer to related descriptions of the first aspect. Details are not described again.

**According to a sixth aspect,** an embodiment of this application provides a communication method. The method is applicable to a first AP. For example, the first AP may be an AP device or a unit, module, or chip (system) in the AP device.

In the method, the first AP sends information indicating to request to enter a first mode; or the first AP receives the information indicating to request to enter the first mode. The first mode indicates that a non-AP STA and/or an AP in the first mode is allowed to switch a primary channel based on first TWT information.

In a possible implementation, the first AP sends information indicating a success of entering the first mode; or the first AP receives the information indicating a success of entering the first mode.

In a possible implementation, the first AP sends information indicating to end the first mode; or the first AP receives the information indicating to end the first mode.

**According to a seventh aspect,** a communication apparatus is provided. The communication apparatus may be the foregoing first non-AP STA or first AP. The communication apparatus may include a communication unit and a processing unit, to perform any one of the first aspect to the sixth aspect, or perform any one of the possible implementations of the first aspect to the sixth aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any one of the first aspect to the sixth aspect, or perform any one of the possible implementations of the first aspect to the sixth aspect.

**According to an eighth aspect,** a communication apparatus is provided. The communication apparatus may be the foregoing first non-AP STA or first AP. The communication apparatus may include a processor and a memory, to perform any one of the first aspect to the sixth aspect, or perform any one of the possible implementations of the first aspect to the sixth aspect. Optionally, a transceiver is further included. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect to the sixth aspect, or perform any possible implementation of the first aspect to the sixth aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

**According to a ninth aspect,** a communication apparatus is provided. The communication apparatus may be the foregoing first non-AP STA or first AP. The communication apparatus may include a processor, to perform any one of the first aspect to the sixth aspect, or perform any one of the possible implementations of the first aspect to the sixth aspect. The processor is coupled to a memory. Optionally, the communication apparatus further includes the memory. Optionally, the communication apparatus further includes a communication interface, and the processor is coupled to the communication interface.

In an implementation, when the communication apparatus is the first non-AP STA or the first AP, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

**According to a tenth aspect,** a system is provided. The system includes the foregoing first non-AP STA.

In a possible implementation, the system further includes a first AP.

**According to an eleventh aspect,** a computer program product is provided. The computer program product includes a computer program (which may also be referred to as code or instructions). When the computer program runs, a computer is enabled to perform any one of the first aspect to the sixth aspect, or perform any one of the possible implementations of the first aspect to the sixth aspect.

**According to a twelfth aspect,** a computer-readable storage medium is provided. The computer-readable medium stores a computer program (which may also be referred to as code or instructions). When the computer program runs on a computer, the computer is enabled to perform any one of the first aspect to the sixth aspect, or perform any one of the possible implementations of the first aspect to the sixth aspect.

**According to a thirteenth aspect,** a chip system is provided. The chip system may include a processor. The processor is coupled to a memory, and may be configured to perform any one of the first aspect to the sixth aspect, or perform any one of the possible implementations of the first aspect to the sixth aspect. Optionally, the chip system further includes the memory. The memory is configured to store a computer program (which may also be referred to as code or instructions). The processor is configured to invoke the computer program from the memory and run the computer program, so that a device in which the chip system is installed performs any one of the first aspect to the sixth aspect, or performs any one of the possible implementations of the first aspect to the sixth aspect.

**According to a fourteenth aspect,** a processing apparatus is provided, and includes an interface circuit and a processing circuit. The interface circuit may include an input circuit and an output circuit. The processing circuit is configured to: receive a signal by using the input circuit, and transmit a signal by using the output circuit, so that any one of the first aspect to the sixth aspect or any one of the possible implementations of the first aspect to the sixth aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the processing apparatus is a first non-AP STA or a first AP, the interface circuit may be a radio frequency processing chip in the first non-AP STA or the first AP, and the processing circuit may be a baseband processing chip in the first non-AP STA or the first AP.

In another implementation, the processing apparatus may be a part of the first non-AP STA or the first AP, for example, an integrated circuit product like a system chip or a communication chip. The interface circuit may be an input/output interface, an interface circuit, an output circuit, an input circuit, a pin, a related circuit, or the like in the chip or a chip system. The processing circuit may be a logic circuit on the chip.

### BRIEF DESCRIPTION OF DRAWINGS

FIG. 1 is a diagram of an architecture of a communication system according to this application;
FIG. 2 is a diagram of a specific structure of an AP or a non-AP STA according to this application;
FIG. 3 is a possible diagram of a communication method according to this application;
FIG. 4 is a diagram of a possible structure of a frame format according to this application;
FIG. 5 is a diagram of a possible structure of a frame format according to this application;
FIG. 6 is a schematic flowchart of a communication method according to an embodiment of this application;
FIG. 7 is a diagram of a possible structure of a frame format according to this application;
FIG. 8 is a diagram of a possible structure of a frame format according to this application;
FIG. 9 is a schematic flowchart of a communication method according to an embodiment of this application;
FIG. 10 is a schematic flowchart of a communication method according to an embodiment of this application;
FIG. 11 is a schematic flowchart of a communication method according to an embodiment of this application;
FIG. 12 is a diagram of a possible structure of a frame format according to this application;
FIG. 13 is a diagram of a possible structure of a frame format according to this application;
FIG. 14 is a diagram of a structure of a communication apparatus according to an embodiment of this application; and
FIG. 15 is a diagram of a structure of a communication apparatus according to an embodiment of this application.

### DESCRIPTION OF EMBODIMENTS

A communication method provided in this application may be applied to various communication systems. For example, the communication method provided in this application is applicable to a wireless local area network (wireless local area network, WLAN) scenario. For example, the communication method is applicable to IEEE 802.11 system standards, for example, the 802.11a/b/g standard, the 802.11n standard, the 802.11ac standard, the 802.11ax standard, a next generation of the 802.11ax standard like the 802.11be standard, wireless fidelity (wireless fidelity, Wi-Fi) 7, or extremely high throughput (extremely high throughput, EHT), a next-generation Wi-Fi protocol (for example, Wi-Fi 8, ultra high reliability (ultra high reliability, UHR), or 11bn) of 802.11be, Wi-Fi artificial intelligence (artificial intelligence, AI), or millimeter wave (millimeter wave, mmWave). This application may be further applied to a wireless personal area network system based on ultra-wideband (ultra wideband, UWB) and a sensing (sensing) system. Embodiments of this application are further applicable to a wireless local area network system like an Internet of things (Internet of things, IoT) network or a vehicle-to-everything (vehicle to X, V2X) network. Certainly, embodiments of this application are further applicable to other possible communication systems, for example, a long term evolution (long term evolution, LTE) system, a universal mobile telecommunication system (universal mobile telecommunication system, UMTS), a 5th generation (5th generation, 5G) communication system, and a 6th generation (6th generation, 6G) communication system.

Although embodiments of this application are mainly described by using an example of a WLAN network, especially a network to which the IEEE 802.11 system standards are applied, a person skilled in the art easily understands that various aspects of this application can be extended to other networks that use various standards or protocols, for example, Bluetooth (BLUETOOTH), a high performance radio local area network (high performance radio local area network, HIPERLAN) (a wireless standard that is similar to the IEEE 802.11 standard, and is mainly used in Europe), a wide area network (wide area network, WAN), a personal area network (personal area network, PAN), or another known or later developed network. Therefore, various aspects provided in this application may be applied to any suitable wireless network regardless of coverage and wireless access protocols used.

The foregoing communication systems to which this application is applicable are merely examples for description, and the communication systems to which this application is applicable are not limited thereto. This is uniformly described herein, and details are not described below again.

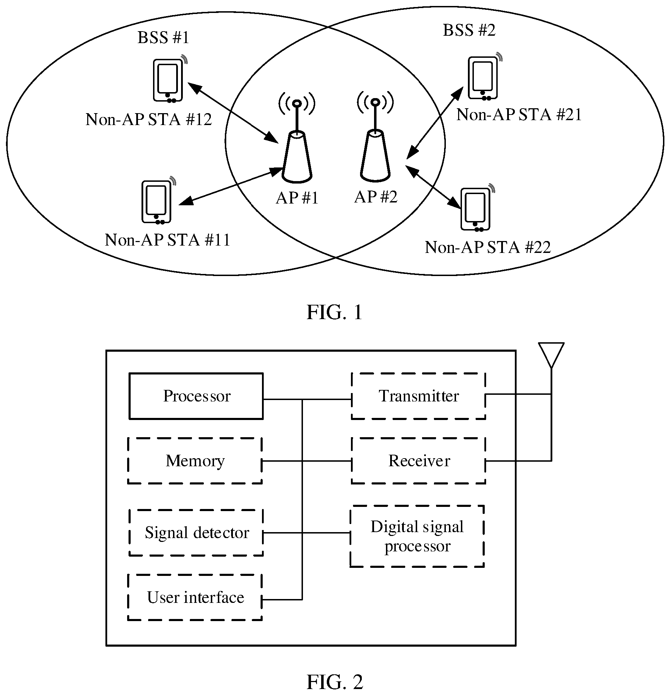

For example, **FIG. 1** shows a possible architecture of a communication system to which a communication method is applicable according to this application. The architecture of the communication system may include at least one BSS, for example, a BSS #1 and a BSS #2 in FIG. 1. A BSS whose coverage overlaps that of the BSS may be referred to as an OBSS. For example, an OBSS of the BSS #1 may include the BSS #2, and an OBSS of the BSS #2 may include the BSS #1. One BSS may include one or more OBSSs. In FIG. 1, two BSSs are used as an example.

One BSS may include at least one AP and at least one non-AP STA. For example, the BSS #1 in FIG. 1 includes an AP #1, a non-AP STA #11, and a non-AP STA #12, and the BSS #2 includes an AP #2, a non-AP STA #21, and a non-AP STA #22.

The AP may be an access point used by a terminal device (for example, a mobile phone) to access a wired (or wireless) network, and is mainly deployed in a home, a building, or a campus. A typical coverage radius is tens of meters to hundreds of meters. Certainly, the AP may alternatively be deployed outdoors. The access point is equivalent to a bridge that connects a wired network and a wireless network. A main function of the access point is to connect various wireless network clients together and then connect the wireless network to a DS. Specifically, the access point may be a terminal device (like a mobile phone) or a network device (like a router) with a Wi-Fi chip. The access point may be a device that supports the 802.11be standard. The access point may alternatively be a device supporting a plurality of wireless local area network (wireless local area network, WLAN) standards of the 802.11 family, for example, 802.11ax, 802.11ac, 802.11n, 802.11g, 802.11b, 802.11a, 802.11be, Wi-Fi 7, Wi-Fi 8, or a next-generation standard of Wi-Fi 8. The access point in this application may be a high-efficiency (high-efficiency, HE) AP, an extremely high throughput (extremely high throughput, EHT) AP, or an access point applicable to a future generation Wi-Fi standard.

The non-AP STA may be a wireless communication chip, a wireless sensor, or a wireless communication terminal, and may also be referred to as a user or a non-AP (non-AP STA). For example, the non-AP STA may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, or a computer supporting a Wi-Fi communication function. Optionally, the non-AP STA may support the 802.11be standard. The non-AP STA may alternatively support a plurality of wireless local area network (wireless local area network, WLAN) standards of the 802.11 family, for example, 802.11ax, 802.11ac, 802.11n, 802.11g, 802.11b, 802.11a, 802.11be, Wi-Fi 7, Wi-Fi 8, or a next-generation standard of Wi-Fi 8.

The non-AP STA in this application may be a high efficiency (high efficiency, HE) non-AP STA, an extremely high throughput (extremely high throughput, EHT) non-AP STA, or a non-AP STA applicable to a future-generation Wi-Fi standard.

For example, the AP and the non-AP STA may be sensor nodes (for example, a smart water meter, a smart electricity meter, and a smart air detection node) in a smart city, smart devices (for example, a smart camera, a projector, a display, a television, a stereo, a refrigerator, and a washing machine) in a smart home, nodes in the Internet of things (Internet of things, IoT), entertainment terminals (for example, wearable devices like AR and VR), smart devices (for example, a printer and a projector) in smart office, an Internet of vehicles device in the Internet of vehicles, and some infrastructures (for example, a vending machine, a self-service navigation station of a supermarket, a self-service cash register device, and a self-service ordering machine) in daily life scenarios.

For example, a specific structure of the AP or the non-AP STA may be the structure shown in the diagram in FIG. 2, and may include a processor. Optionally, the specific structure of the AP or the non-AP STA may further include one or more of the following: a memory, a transmitter, a receiver, a signal detector, or a digital signal processor. Optionally, the specific structure of the AP or the non-AP STA may further include a user interface. The transmitter and the receiver may be further integrated into a transceiver. This is not limited in this application.

The names of the devices shown in FIG. 1 are merely an example. In a future communication system, there may be other names. A quantity of devices in FIG. 1 is also merely an example, and more or fewer devices may be included. This is not limited in this application.

The communication method provided in this application is applicable to a plurality of scenarios, for example, applicable to data communication between an AP and one or more non-AP STAs, or applicable to scenarios of a TWT mechanism and subchannel selection based on a state of a primary channel in another technology. This is not limited in this application.

The following first describes some nouns or terms in embodiments of this application.

### (1) TWT

The "TWT" usually refers to a TWT technology or a TWT operation set up after negotiation succeeds. The TWT technology is a technology introduced in Wi-Fi 6 for power saving of stations. Specifically, a TWT requester (TWT requester) initiates a "TWT setup" request to a TWT responder (TWT responder), and the TWT responder determines all parameters related to a TWT operation, for example, information such as "whether the TWT operation is successfully set up", start time of a 1^{st} TWT SP, and a period of the TWT SP (if required). After TWT is successfully set up, the TWT requester may enter a doze state (doze state) in a power saving mode (Power Saving mode) until the 1^{st} TWT SP starts. The TWT requester and the TWT responder exchange data during the TWT SP. It can be learned that the TWT requester and the TWT responder negotiate time, and perform data transmission in the negotiated time range. In this way, the TWT requester may enter the doze state outside the negotiated time range, to save power.

TWT setup is classified into two types: individual TWT negotiation (individual TWT negotiation) and broadcast TWT agreement (broadcast TWT agreement). A new technology of restricted TWT (Restricted TWT, R-TWT) based on the broadcast TWT agreement (broadcast TWT agreement) is introduced in Wi-Fi 7. From a setup form to a use process, the R-TWT is a special example of the TWT. However, a purpose of setting up the R-TWT, different from a purpose of using the TWT, is to preferentially serve a low-latency service. Because it is specified in the R-TWT that, in an R-TWT SP, a station that has a low-delay service needs to send data of the low-delay service first.

In embodiments of this application, the R-TWT technology also belongs to the TWT technology. The TWT in embodiments of this application may include the current TWT, the R-TWT technology, or a future technology developed based on the TWT technology.

### (2) BSS and OBSS

The BSS is a basic component in an 802.11 local area network (local area network, LAN).

In the BSS, a station (station, STA) with a special function serves as an access point for all stations in the BSS to access a distributed network (distributed system, DS), and the special station is the access point (access point, AP) of the BSS and is responsible for managing the BSS. When a non-access point station (non-AP STA) needs to access the DS, the non-AP STA needs to associate with the AP and access the DS via the associated AP. Each BSS managed by an AP entity may include at least one non-AP STA, and a plurality of non-AP STAs are associated with the AP entity corresponding to the BSS.

As APs are more densely deployed, an OBSS exists near the BSS. The OBSS is a BSS whose coverage overlaps coverage of the BSS. Communication in the BSS and communication in the OBSS may affect each other.

### (3) Primary channel

The primary channel (primary channel) is a channel on which a transmitter and a receiver (for example, an AP and a non-AP STA) synchronize. For example, in a possible implementation, both the AP and the non-AP STA know that a 20 megahertz (Mega Hertz, MHz) channel is a primary channel. In this way, the AP and the non-AP STA synchronize on the channel (the synchronization may also be referred to as physical layer protocol data unit (physical layer protocol data unit, PPDU) synchronization). After the AP and the non-AP STA completes synchronization, a PPDU starts to be received and decoded, so that the receiver extracts information transmitted by the transmitter.

In the solution provided in embodiments of this application, the primary channel may be agreed on between the AP and the non-AP STA, and the primary channel between the non-AP STA and the AP may be switched.

According to embodiments shown in FIG. 1 and FIG. 2 and the foregoing other content,

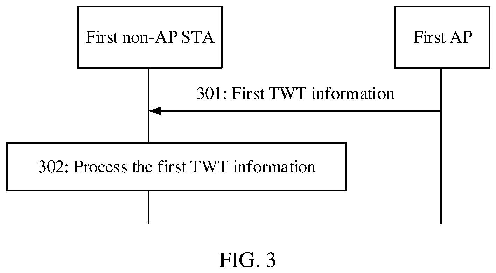

FIG. 3 is a possible schematic flowchart of an example of a communication method according to an embodiment of this application. A first non-AP STA in FIG. 3 may be the non-AP STA shown in FIG. 1 and FIG. 2 or a module (for example, a chip) used in the non-AP STA. A first AP and a second AP in FIG. 3 may be the access points shown in FIG. 1 or FIG. 2 or modules (for example, chips) in the access points. The first AP and the second AP may be APs in two BSSs respectively, for example, the AP #1 in the BSS #1 and the AP #2 in the BSS #2. A BSS in which the second AP is located may be referred to as an OBSS of the first AP, and a BSS in which the first AP is located may also be referred to as an OBSS of the second AP. In embodiments of this application, the first AP may have one or more OBSSs. In this embodiment of this application, one OBSS of the first AP is used as an example for description.

As shown in FIG. 3, the method includes the following steps.

**Step 301:** The first AP sends first TWT information.

Correspondingly, the first non-AP STA receives the first TWT information from the first AP.

The first non-AP STA is associated (associated) with the first AP. It may also be understood as that the first non-AP STA is a non-AP STA associated with the first AP.

In this embodiment of this application, the first AP may send one or more pieces of TWT information. The first AP may send the TWT information through broadcasting. The first non-AP STA may receive the first TWT information broadcast by the first AP. The first AP may alternatively send the TWT information through multicast or unicast.

The TWT information sent by the first AP may indicate TWT. For example, the TWT information may indicate information related to an SP of the TWT. For example, the TWT information may indicate information such as start time and end time of the SP. In a possible implementation, the TWT information sent by the first AP is information about TWT. The TWT information sent by the first AP includes the first TWT information in this embodiment of this application. The first TWT information indicates TWT set up between the second AP and a non-AP STA associated with the second AP. The second AP is an AP in the OBSS of the first AP. It may also be understood as that the TWT indicated by the first TWT information is TWT set up between an AP in the OBSS of the first AP and a non-AP STA associated with the AP.

In another possible implementation, the TWT information sent by the first AP may further include second TWT information. For example, the first AP sends the second TWT information. Correspondingly, the first non-AP STA receives the second TWT information from the first AP. TWT indicated by the second TWT information is TWT set up between the first AP and a non-AP STA associated with the first AP. It may also be understood as that the TWT indicated by the second TWT information is TWT set up between an AP in a BSS of the first non-AP STA and a non-AP STA associated with the AP.

The first TWT information and the second TWT information may be carried in a same frame, or may be separately carried in two frames.

**Step 302:** The first non-AP STA processes the first TWT information.

Step 302 may be understood as that the first non-AP STA processes (for example, parses) a message carrying the first TWT information, to obtain the first TWT information.

When the first non-AP STA also receives the second TWT information, the first non-AP STA may also process the second TWT information, for example, parse a message carrying the second TWT information, to obtain the second TWT information. In another possible implementation, the first non-AP STA may communicate with the first AP in an SP phase of the second TWT information based on a TWT mechanism. For example, the first non-AP STA communicates with the first AP in the SP phase of the second TWT information on a first channel serving as a primary channel.

The first TWT information includes first indication information, so that the first non-AP STA can identify TWT set up between an AP in an OBSS and a non-AP STA associated with the AP, to assist the non-AP STA in performing communication based on the TWT mechanism.

In this embodiment of this application, the TWT information (for example, the first TWT information and/or the second TWT information) sent by the first AP may include information indicating whether the TWT indicated by the TWT information is the TWT set up between the AP in the OBSS and the non-AP STA associated with the AP. When the TWT indicated by the TWT information sent by the first AP is the TWT set up between the AP in the OBSS and the non-AP STA associated with the AP, the TWT indicated by the TWT information is not the TWT set up between the AP in the BSS in which the first AP is located and the non-AP STA associated with the AP. When the TWT indicated by the TWT information sent by the first AP is the TWT set up between the AP in the BSS in which the first AP is located and the non-AP STA associated with the AP, the TWT indicated by the TWT information is not the TWT set up between the AP in the OBSS and the non-AP STA associated with the AP. In view of this, it may also be understood that the information indicating whether the TWT information is the TWT set up between the AP in the OBSS and the non-AP STA associated with the AP may be replaced with information indicating whether the TWT information is information about TWT set up between an AP in a BSS and a non-AP STA associated with the AP.

In another possible implementation, the TWT information (for example, the first TWT information and/or the second TWT information) sent by the first AP may also include information indicating whether the primary channel needs to be switched in an SP phase of the TWT indicated by the TWT information. One or more pieces of indication information may be added to the TWT information, so that the first non-AP STA performs a subsequent operation based on the information. The information may enable the first AP and the first non-AP STA to determine, based on a same condition, whether the primary channel needs to be switched, so that the first AP and the first non-AP STA can make a same decision based on the same condition, that is, both the first AP and the first non-AP STA switch or do not switch the primary channel.

In this embodiment of this application, one piece of TWT information (for example, the first TWT information or the second TWT information) may be carried in one message, or may be sent via a plurality of messages, where each message may carry a part of the TWT information.

In this embodiment of this application, indication information included in one piece of TWT information (for example, the first TWT information and/or the second TWT information) may be carried in one or more bits or fields in a frame of the TWT information. For example, the TWT information (for example, the first TWT information and/or the second TWT information) may be carried in a TWT element (TWT element). In this embodiment of this application, the TWT information may alternatively be a TWT element. For example, the first TWT information is a first TWT element, and the second TWT information is a second TWT element. One or more pieces of TWT information (for example, the first TWT information and/or the second TWT information) may be carried in a same beacon (beacon) frame or may be carried in a plurality of different beacon frames. In embodiments of this application, the TWT information (for example, the first TWT information and/or the second TWT information) may alternatively be carried in another frame structure. In this embodiment of this application, an example in which the TWT information (for example, the first TWT information and/or the second TWT information) is carried in the TWT element is used for description.

In this embodiment of this application, one TWT element may include an OBSS indication field and/or a mandatory switch field. Information carried in the OBSS indication field indicates whether TWT indicated by TWT information in the TWT element is the TWT set up between the AP in the OBSS and the non-AP STA associated with the AP. Information carried in the mandatory switch field indicates whether the primary channel needs to be switched in an SP phase of the TWT indicated by the TWT element. The following describes the two fields in Implementation A1 and Implementation A2. In embodiments of this application, field names of the OBSS indication field and the mandatory switch field are merely examples. During actual application, the field names may be replaced with other names.

**Implementation A1**: The TWT element includes the OBSS indication field.

The information carried in the OBSS indication field indicates whether the TWT indicated by the TWT information in the TWT element is the TWT set up between the AP in the OBSS and the non-AP STA associated with the AP. For example, a value carried in the OBSS indication field is 1. It indicates that the TWT indicated by the TWT information in the TWT element is the TWT set up between the AP in the OBSS and the non-AP STA associated with the AP. If the value carried in the OBSS indication field is 0, it indicates that the TWT indicated by the TWT information in the TWT element is not the TWT set up between the AP in the OBSS and the non-AP STA associated with the AP, but the TWT set up between the AP in the BSS and the non-AP STA associated with the AP. In this example, the value carried in the OBSS indication field is an example. During actual application, the value carried in the field may be flexibly set.

In this embodiment of this application, the first TWT information may include the first indication information. The first indication information indicates that the TWT indicated by the first TWT information is the TWT set up between the AP in the OBSS of the first AP and the non-AP STA associated with the AP. The first non-AP STA determines, based on the first indication information, that the TWT indicated by the first TWT information is the TWT set up between the AP in the OBSS and the non-AP STA associated with the AP.

The first TWT information may be carried in the first TWT element. The first indication information may be understood as information carried in a bit of the OBSS indication field of the first TWT element. For example, the first indication information may be equivalent to the value 1 carried in the OBSS indication field in the foregoing example.

In another possible implementation, the second TWT information includes second indication information. The second indication information indicates that TWT indicated by the second TWT information is the TWT set up between the first AP and the non-AP STA associated with the first AP. The second TWT information includes the second indication information. Therefore, the first non-AP STA can identify whether the TWT indicated by the received TWT information is the TWT set up between the AP in the BSS and the non-AP STA associated with the AP, and then the first non-AP STA can communicate with the first AP based on the identified TWT set up between the AP in the BSS and the non-AP STA associated with the AP. For example, the first non-AP STA communicates with the first AP in an SP of second TWT on the first channel serving as the primary channel.

In a possible implementation, the second TWT information is carried in the second TWT element. The second indication information may be understood as information carried in a bit of an OBSS indication field of the second TWT element. For example, the second indication information may be equivalent to the value 0 carried in the OBSS indication field in the foregoing example. The second TWT element and the first TWT element may be carried in a same beacon frame, or the second TWT element and the first TWT element are separately carried in two different beacon frames.

In a possible implementation, the bit of the OBSS indication field may be a bit of a reserved field B7 in a control field of a TWT element. For example, the first indication information is carried in a reserved field B7 in a control field of the first TWT element. For another example, the second indication information is carried in a reserved field B7 in a control field of the second TWT element. In this solution, the information (which may also be understood as the first indication information) carried in the OBSS indication field uses the reserved bit of the existing TWT element. This solution can be better compatible with the conventional technology, and does not cause large additional resource overheads.

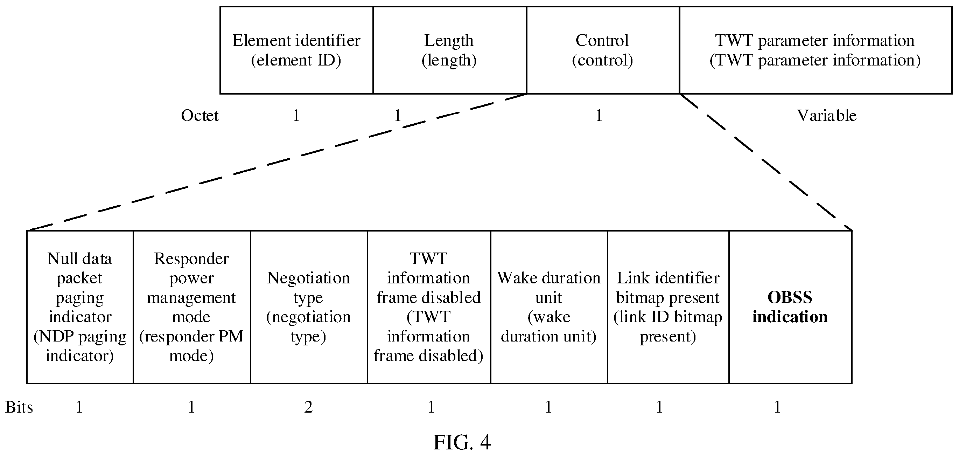

FIG. 4 is a diagram of an example of a structure of the TWT information sent by the first AP.

Refer to FIG. 4. The TWT information may be carried in a TWT element (or a TWT element field). A control (control) field of the TWT element may include an OBSS indication field.

The OBSS indication field may occupy a bit of a reserved (reserved) field in a control (control) field of a beacon frame. After the bit of the reserved field is used, the field may have a new name, for example, the OBSS indication field in this embodiment of this application, or may have another name. This is not limited in embodiments of this application. For information carried in the OBSS indication field, refer to the foregoing content. Details are not described again.

As shown in FIG. 4, the TWT element includes the following fields: an element identifier (Element ID) field, a length (Length) field, a control (Control) field, and a TWT parameter information (TWT Parameter Information) field.

The control field may further include the following content: a null data packet paging indicator (NDP Paging Indicator), a responder power management mode (Responder PM Mode), a negotiation type (Negotiation Type), TWT information frame disabled (TWT Information Frame Disabled), a wake duration unit (Wake Duration Unit), and link identifier bitmap present (Link ID Bitmap Present). For specific meanings of the information shown in FIG. 4, refer to descriptions in the IEEE 802.11 series protocols.

**Implementation A2:** The TWT element includes the mandatory switch field.

Information carried in the mandatory switch field indicates whether the primary channel needs to be switched in an SP phase of the TWT indicated by the TWT element. For example, a value carried in the mandatory switch field is 1. It indicates that the primary channel needs to be switched in the SP phase of the TWT indicated by the TWT element. For another example, the value carried in the mandatory switch field is 0. It indicates that the primary channel does need to be switched in the SP phase of the TWT indicated by the TWT element. In this example, the value carried in the mandatory switch field is an example. During actual application, the value carried in the field may be flexibly set.

For example, when the value carried by the mandatory switch field is 0, the first non-AP STA may detect a current primary channel, and determine, based on a state (for example, a busy state or an idle state) of the current primary channel, whether to switch the primary channel. For example, when the current primary channel is in a busy state, the first non-AP STA and the first AP switch the primary channel in the SP phase of the TWT indicated by the TWT element. For another example, when the current primary channel is in an idle state, the first non-AP STA and the first AP do not switch the primary channel in the SP phase of the TWT indicated by the TWT element. In this embodiment of this application, during communication between the first non-AP STA and the first AP. If the first non-AP STA switches the primary channel, the first AP also switches the primary channel.

In this embodiment of this application, the first TWT information may include third indication information or fourth indication information. The third indication information indicates the first non-AP STA to communicate with the first AP on a primary channel that is switched to. In this way, when the first non-AP STA determines that the first TWT information includes the third indication information, regardless of whether the first channel originally serving as the primary channel is in the idle or busy state, the first non-AP STA switches the primary channel, for example, switches the primary channel from the first channel to a second channel, and communicates with the first AP on the second channel serving as the primary channel. The first non-AP STA may determine, based on the third indication information, a condition for switching the primary channel, so that the first AP and the first non-AP STA make a same decision based on the same condition, that is, both the first AP and the first non-AP STA switch the primary channel.

The fourth indication information indicates the first non-AP STA to communicate with the first AP on a primary channel that is switched to when a state of the first channel is a busy state. The fourth indication information further indicates the first non-AP STA to communicate with the first AP on the first channel serving as the primary channel when the state of the first channel is an idle state. In this way, when the first non-AP STA determines that the first TWT information includes the fourth indication information, the first non-AP STA first detects the first channel originally serving as the primary channel. If the first channel is idle, the first non-AP STA does not need to switch the primary channel. If the first channel is busy, the first non-AP STA switches the primary channel, for example, switches the primary channel from the first channel to the second channel, and communicates with the first AP on the second channel serving as the primary channel. The first non-AP STA may determine, based on the fourth indication information, a condition for switching the primary channel, so that the first AP and the first non-AP STA make a same decision based on the same condition, that is, both the first AP and the first non-AP STA switch or do not switch the primary channel.

The first TWT information may be carried in the first TWT element. The third indication information and the fourth indication information may be understood as information carried in a bit of the mandatory switch field of the first TWT element. For example, the third indication information may be equivalent to the value 1 carried in the mandatory switch field in the foregoing example. For another example, the fourth indication information may be equivalent to the value 0 carried in the mandatory switch field in the foregoing example.

In another possible implementation, the information carried in the OBSS indication field may indicate whether the TWT information includes the mandatory switch field. Alternatively, the information carried in the OBSS indication field indicates whether the mandatory switch field of the TWT information carries a valid value.

For example, the information carried in the OBSS indication field indicates that the TWT indicated by the first TWT information is the TWT set up between the AP in the OBSS and the non-AP STA associated with the AP (that is, the first TWT information includes the first indication information). In this case, the first TWT information includes the third indication information or the fourth indication information. It may also be understood as that the first indication information indicates that the first TWT information includes the third indication information or the fourth indication information.

For another example, the information carried in the OBSS indication field indicates that the TWT indicated by the first TWT information is the TWT set up between the AP in the BSS and the non-AP STA associated with the AP. In this case, the TWT information carrying the OBSS indication field does not include the third indication information and the fourth indication information.

In a possible implementation, the bit of the mandatory switch field may be the TWT parameter information field of the TWT element. The mandatory switch field may be a newly added field in the TWT parameter information field of the TWT element. It may also be understood as that the third indication information or the fourth indication information is carried in the TWT parameter information field of the first TWT element. In this solution, the information (which may also be understood as the third indication information or the fourth indication information) carried in the mandatory switch field is located in the TWT parameter information field. This solution can be better compatible with the conventional technology.

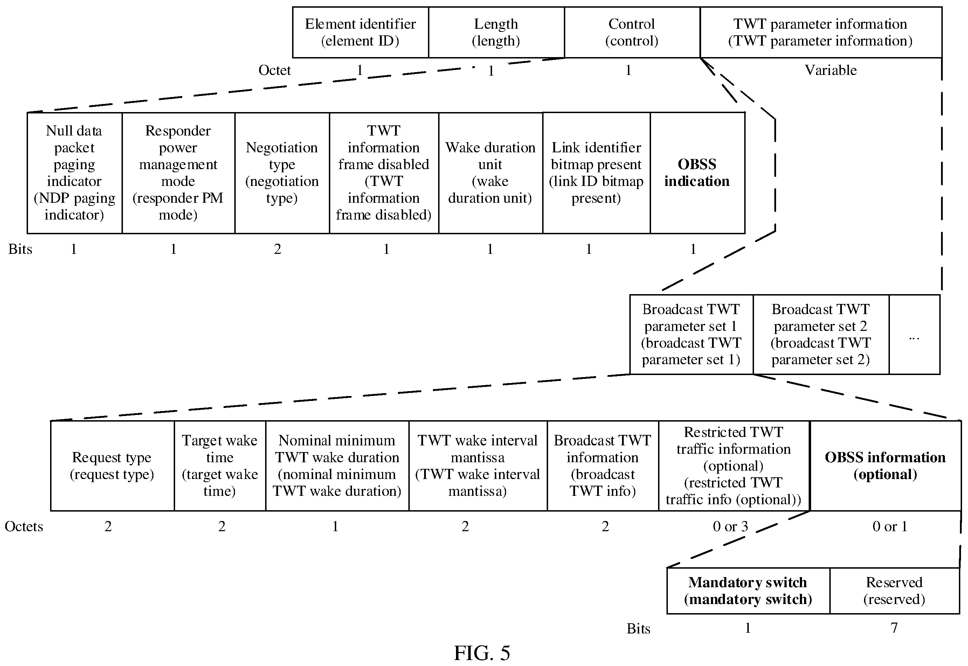

FIG. 5 is a diagram of an example of a structure of the TWT information sent by the first AP.

Refer to FIG. 5. The TWT information may be carried in a TWT element (or a TWT element field). FIG. 5 is described by using an example in which a control (control) field of the TWT element may include an OBSS indication field.

As shown in FIG. 5, the TWT parameter information may include one or more broadcast TWT parameter sets (Broadcast TWT Parameter Set) (for example, a broadcast TWT parameter set 1 and a broadcast TWT parameter set 2 in FIG. 5). One (or each) broadcast TWT parameter set includes the following content: a request type (Request Type), target wake time (Target Wake Time), nominal minimum TWT wake duration (Nominal Minimum TWT Wake Duration), a TWT wake interval mantissa (TWT Wake Interval Mantissa), broadcast TWT information (Broadcast TWT Info), restricted TWT traffic information (optional) (Restricted TWT Traffic Info (optional)), and an OBSS information (OBSS info) field. The OBSS information field is an optional field. In this embodiment of this application, info is short for information (information, info).

The OBSS information field may be carried in the broadcast TWT parameter set in the TWT parameter information, and may be a newly added field.

The OBSS information field may include the mandatory switch (mandatory switch) field. The information carried in the mandatory switch (mandatory switch) field may indicate whether the primary channel needs to be switched in an SP phase of TWT indicated by the TWT parameter set. For related content, refer to the foregoing related descriptions of the information carried in the mandatory switch field.

The OBSS information field may further include a reserved (reserved) field. The reserved field may be reserved for future use or used for other information that needs to be transmitted.

For specific meanings of the information shown in FIG. 5, refer to descriptions in the FIG. 4 and the IEEE 802.11 series protocols.

In this embodiment of this application, the first non-AP STA may perform some operations based on the first TWT information. The following uses Implementation B1 and Implementation B2 as examples for description. In Implementation B1, the first non-AP STA switches the primary channel based on the first TWT information. In Implementation B2, the first non-AP STA determines, based on the first TWT information and the state of the current primary channel, whether to switch the primary channel.

**Implementation B1:** The first non-AP STA switches the primary channel based on the first TWT information.

In Implementation B1, the first non-AP STA switches the primary channel from the first channel to the second channel based on the first TWT information (for example, the first indication information and information about an SP of the TWT indicated by the first TWT information), and communicates with the first AP on the second channel serving as the primary channel. The first AP switches the primary channel from the first channel to the second channel based on the first TWT information (for example, the first indication information and the information about the SP of the TWT indicated by the first TWT information), and communicates with the first non-AP STA on the second channel serving as the primary channel.

For example, the first non-AP STA (and/or the first AP) determines, based on the first indication information in the first TWT information, that the TWT indicated by the first TWT information is the TWT set up between the AP in the OBSS and the non-AP STA, determines, based on the information about the SP of the TWT indicated by the first TWT information, start time of switching the primary channel from the first channel to the second channel, and switches the primary channel from the first channel to the second channel at the start time.

In this embodiment of this application, the first non-AP STA and the first AP may switch the primary channel. For example, the primary channel between the first non-AP STA and the first AP before switching is the first channel, and the primary channel that is switched to is the second channel. In this embodiment of this application, the primary channel that is switched to may also be referred to as an anchor (anchor) channel, an anchor channel, a secondary primary channel, or the like.

In a possible implementation, the first non-AP STA communicates with the first AP in the second TWT, and the primary channel is the first channel. In non-second TWT, the first non-AP STA needs to communicate with the first AP based on a conventional solution, that is, the first non-AP STA listens to the primary channel (the first channel). When the first channel is busy, the first non-AP STA backs off. When the first channel is idle, the first non-AP STA communicates with the first AP on the first channel serving as the primary channel. However, the first channel may also be a primary channel of the second AP in the OBSS. The second AP sets up the first TWT with a non-AP STA associated with the second AP. The first channel is more likely to be in a busy state during the SP of the first TWT, and consequently, communication efficiency of the first non-AP STA in the first TWT is low.

In the foregoing example, the first non-AP STA switches the primary channel from the first channel to the second channel during the SP of the first TWT, to reduce a probability that the primary channel is in the busy state. Then, the first non-AP STA performs transmission on the second channel serving as the primary channel during the SP of the first TWT, to improve communication efficiency.

In a possible implementation, the start time of switching the primary channel from the first channel to the second channel is start time of the SP of the first TWT; or the start time of switching the primary channel from the first channel to the second channel is before start time of the SP of the first TWT.

In another possible implementation, completion time of switching the primary channel from the first channel to the second channel is the start time of the SP of the first TWT; or completion time of switching the primary channel from the first channel to the second channel is before the start time of the SP of the first TWT; or completion time of switching the primary channel from the first channel to the second channel is in preset duration after the start time of the SP of the first TWT.

The start time and/or the completion time of switching the primary channel to the second channel is limited, so that the first AP and the first non-AP STA can complete switching of the primary channel in a short time period before or after the start time of the SP of the first TWT. Therefore, the first AP can communicate with the first non-AP STA on the primary channel that is switched to in a long time period during the SP of the first TWT, to improve communication efficiency.

**Implementation B2:** The first non-AP STA determines, based on the first TWT information and the state of the current primary channel, whether to switch the primary channel.

In Implementation B2, the first non-AP STA (and/or the first AP) may detect the current primary channel, and determine, based on a detection result, whether to switch the primary channel. For example, when the current primary channel is in a busy state, the first non-AP STA and the first AP switch the primary channel in the SP phase of the first TWT. For example, the first non-AP STA switches the primary channel from the first channel to the second channel, and communicates with the first AP on the second channel serving as the primary channel. Correspondingly, the first AP switches the primary channel from the first channel to the second channel, and communicates with the first non-AP STA on the second channel serving as the primary channel.

For another example, when the current primary channel is in an idle state, the first non-AP STA and the first AP do not switch the primary channel in the SP phase of the first TWT. For example, the first non-AP STA communicates with the first AP on the first channel serving as the primary channel. Correspondingly, the first AP communicates with the first non-AP STA on the first channel serving as the primary channel.

In a possible implementation, start time of channel detection is the start time of the SP of the first TWT; or start time of channel detection is before the start time of the SP of the first TWT.

In another possible implementation, completion time of channel detection is the start time of the SP of the first TWT; or completion time of channel detection is before the start time of the SP of the first TWT; or completion time of channel detection is in preset duration after the start time of the SP of the first TWT.

The start time and/or the completion time of channel detection is limited, so that the first AP and the first non-AP STA can complete detection of the primary channel in a short time period before or after the start time of the SP of the first TWT, earlier determine whether to switch the primary channel, and when the primary channel needs to be switched, switch the primary channel as early as possible. Therefore, the first AP can communicate with the first non-AP STA on the primary channel that is switched to in a long time period during the SP of the first TWT, to improve communication efficiency.

The first non-AP STA (and/or the first AP) detects the primary channel. The start time of channel detection may be before the start time of switching the primary channel, and the completion time of channel detection may be before the start time of switching the primary channel. For example, if the start time of channel detection is the start time of the SP of the first TWT, the start time of switching the primary channel is highly likely to be after the start time of the SP of the first TWT.

In a possible implementation, the first non-AP STA may start switching of the primary channel in preset duration after determining that the current primary channel is in the busy state. The preset duration may be understood as duration from the completion time of channel detection to the start time of switching the primary channel. The preset duration may be a short value, so that the first AP and the first non-AP STA can complete switching as early as possible. This further improves communication efficiency.

In this application, Implementation B1 and Implementation B2 may not be combined with Implementation A2. For example, Implementation B1 and Implementation B2 may be rules pre-agreed on by the first AP and the first non-AP STA, and the first AP and the first non-AP STA may perform corresponding operations in Implementation B1 or Implementation B2 according to the pre-agreed rules. Implementation B1 and Implementation B2 may alternatively be combined with Implementation A2. For example, the first non-AP STA may select, based on the mandatory switch field in the solution provided in Implementation A2, whether to use Implementation B1 or Implementation B2.

In this application, Implementation B1 and Implementation B2 may be or may not be combined with Implementation A1. For example, the first AP and the first non-AP STA may identify, in another manner, whether the TWT indicated by the TWT information is the TWT set up between the AP in the OBSS and the non-AP STA associated with the AP.

In a possible implementation, when Implementation B1 or Implementation B2 is used, the first non-AP STA switches the primary channel from the first channel to the second channel based on the first TWT information, and communicates with the first AP on the second channel serving as the primary channel. Then, the first non-AP STA switches the primary channel from the second channel to the first channel, and communicates with the first AP on the first channel serving as the primary channel.

In a possible implementation, start time of switching the primary channel from the second channel to the first channel is end time of the SP of the first TWT or is after end time of the SP of the first TWT.

In another possible implementation, completion time of switching the primary channel from the second channel to the first channel is the end time of the SP of the first TWT or is after the end time of the SP of the first TWT.

The start time and/or the completion time of switching the primary channel back to the first channel is limited, so that the first AP and the first non-AP STA can switch the second channel back to the original primary channel in a short time period before or after the end time of the SP of the first TWT. Therefore, the first AP can communicate with the first non-AP STA on the primary channel that is originally configured. It can be learned that in embodiments of this application, the first AP and the first non-AP STA temporarily switch the primary channel, and time for communication on the primary channel that is switched to may not be long. Therefore, a plurality of parameters related to the primary channel may not need to be changed, to reduce complexity of the solution.

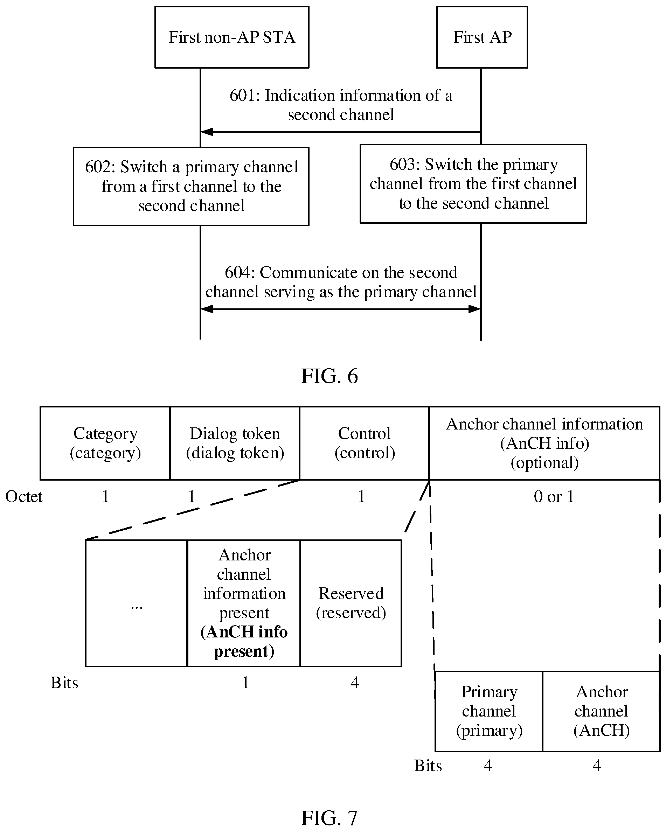

According to embodiments shown in FIG. 1, FIG. 2, FIG. 3, FIG. 4, and FIG. 5 and the foregoing other content, FIG. 6 is a possible schematic flowchart of an example of a communication method according to an embodiment of this application. For related descriptions of a first non-AP STA, a first AP, and a second AP in FIG. 6, refer to the foregoing content in FIG. 3. Details are not described again.

As shown in FIG. 6, the method includes the following steps.

**Step 601:** The first AP sends indication information of a second channel.

Correspondingly, the first non-AP STA receives the indication information of the second channel.

**Step 602:** The first non-AP STA switches a primary channel from a first channel to the second channel.

**Step 603:** The first AP switches the primary channel from the first channel to the second channel.

**Step 604:** The first AP communicates with the first non-AP STA on the second channel serving as the primary channel.

In this implementation, the first AP may send the indication information of the second channel, so that the first non-AP STA learns of a secondary primary channel (namely, a second primary channel), and then the first AP and the first non-AP STA may switch to the secondary primary channel for communication.

The implementation shown in FIG. 6 may be performed independently, or may be combined with the embodiment shown in FIG. 3. For example, the first AP may send the indication information of the second channel to the first non-AP STA based on the solution provided in FIG. 6. Then, when determining that the primary channel needs to be switched, the first non-AP STA switches the primary channel to the second channel based on the indication information of the second channel. The embodiment in FIG. 3 may not be combined with the embodiment in FIG. 6. In this case, the first non-AP STA may obtain the indication information of the second channel in another manner, for example, through pre-configuration, or by receiving the indication information of the second channel from another apparatus (an apparatus other than the first AP).

In a possible implementation, the indication information of the second channel may include an identifier of the second channel or an index of the second channel. Alternatively, the indication information of the second channel includes a first value and a second value. The first value corresponds to a location of the first channel. A relationship between the first value and the second value indicates a relative location relationship between the first channel and the second channel.

For example, an identifier of a subchannel (for example, a subchannel whose bandwidth is 20 MHz) may be indicated by a value in [0, 15], and the first value may be any value in [0, 15]. The first value corresponds to the location of the first channel. The first AP and the first non-AP STA pre-agree on the primary channel (namely, the first channel), for example, pre-agree on that the first channel is a primary 20 MHz subchannel. For example, the first value is 3, and the second value is 5. Because a difference between the second value and the first value is 2, it may be determined that a second subchannel corresponding to the second value is a second subchannel whose bandwidth is 20 MHz at a high frequency of a first subchannel corresponding to the first value.

In another aspect, workstations with different bandwidth may have different numbers of the primary channel. In embodiments of this application, a relative location rather than an absolute number of a channel indicates a used channel, to avoid ambiguity and facilitate implementation.

For example, a 20 MHz workstation, an 80 MHz workstation, and a 160 MHz workstation are associated with a 160 MHz BSS. The 20 MHz workstation uses only the primary channel, and does not need to number the primary channel. The 80 MHz workstation numbers the primary channel in a range of 0 to 3 (because a channel is divided into 20 MHz subchannels, four subchannels can be obtained through division, and the primary channel is one of the four subchannels). The 160 MHz workstation numbers the primary channel in a range of 0 to 15. If the indication information of the second channel is an index of a subchannel whose absolute number is 10, because neither the 20 MHz workstation nor the 80 MHz workstation has a 10^{th} subchannel, the two workstations cannot understand the information. In this embodiment of this application, if the first value is 2 and the second value is 10, both the 20 MHz station and the 80 MHz station can understand the information, and find the second primary channel based on the information.

In another possible implementation, the frame used to carry the indication information of the second channel further includes information indicating whether the indication information of the second channel is present in the frame. For example, the frame used to carry the indication information of the second channel further includes information indicating that the indication information of the second channel is present in the frame. In this case, the first non-AP STA continues to parse the field, of the frame, carrying the indication information of the second channel. For another example, the frame used to carry the indication information of the second channel includes information indicating that the frame does not include the indication information of the second channel. In this case, the first non-AP STA does not parse the field, of the frame, carrying the indication information of the second channel. This can reduce workload of the first non-AP STA and reduce power consumption of the first non-AP STA.

FIG. 7 is a diagram of an example of a possible structure of the frame used to carry the indication information of the second channel.

Refer to FIG. 7. The frame is an action (action) frame or a management frame.

As shown in FIG. 7, the frame includes fields such as a category (category) field, a dialog token (dialog token) field, a control (control) field, and an anchor channel (anchor channel, AnCH) information (information, Info) field.

The category (category) field may be used to allocate a new category (category) value. The dialog token (dialog token) field may be used to identify a procedure (for example, a negotiation procedure) corresponding to the frame. Values carried in dialog token (dialog token) fields of frames in a same procedure may be the same, so that the first AP and the first non-AP STA determine which procedure each frame belongs to. The control (control) field is used to carry control information.

The control (control) field may include an anchor channel information present (AnCH Info present) field. The field may carry the information indicating whether the indication information of the second channel is present in the frame. For example, a bit value carried in the field is 1. It indicates that the indication information of the second channel is present in the frame. For another example, the bit value carried in the field is 0. It indicates that the indication information of the second channel is not present in the frame. In this embodiment of this application, the control (control) field may further include another field, and may further include a reserved (reserved) field. During actual application, the control field may be set based on a requirement.

The anchor channel information (AnCH Info) field may carry the indication information of the second channel. For example, the anchor channel information (AnCH Info) field includes a primary (primary) channel field and an anchor channel (AnCH) field. The primary (primary) channel field carries the first value, and the anchor channel (AnCH) field carries the second value. The setting is proper, and is more easily compatible with the conventional technology.

For specific meanings of the information shown in FIG. 7, refer to descriptions in the IEEE 802.11 series protocols.

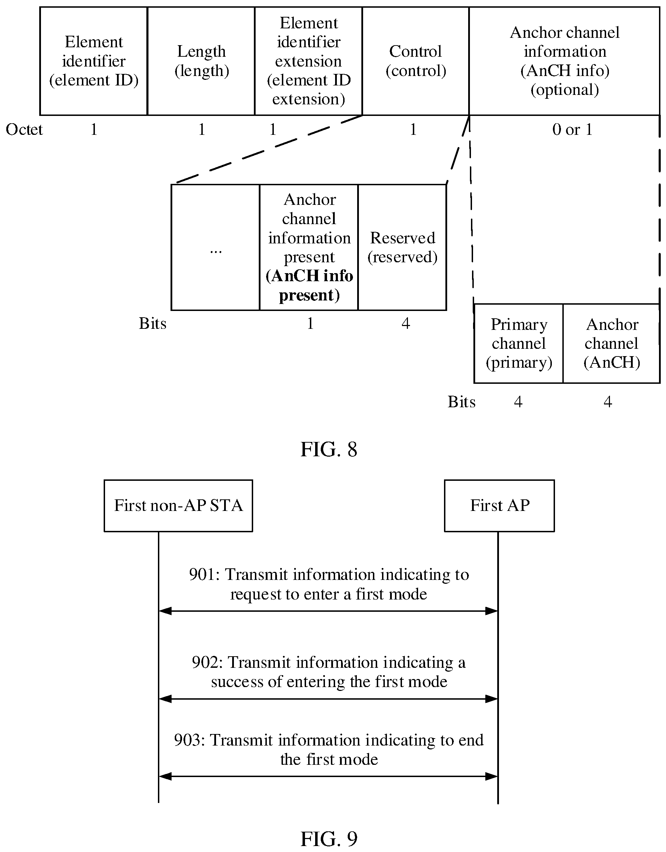

FIG. 8 is a diagram of an example of another possible structure of the frame used to carry the indication information of the second channel.

FIG. 8 shows an element field in an action (action) frame or a management frame.

As shown in FIG. 8, the element includes fields such as an element identifier (element ID) field, a length (length) field, an element identifier extension (element ID extension) field, a control (control) field, and an anchor channel information (AnCH Info) field.

The element identifier (element ID) field and the element identifier extension (element ID extension) field jointly indicate the current element field. Values carried in the element identifier (element ID) field and the element identifier extension (element ID extension) field may be newly defined values. The length (length) field indicates a length of the current element field.

If the embodiment shown in FIG. 6 is used in combination with the embodiment in FIG. 3, in a possible implementation provided in FIG. 3, because the first non-AP STA can automatically switch the primary channel, the solution performed by the first non-AP STA may also be referred to as an automatic subchannel selection (automatic subchannel selection, ASS) solution. The element field may also be referred to as an ASS element field. In this case, the element identifier (element ID) field and the element identifier extension (element ID extension) field jointly indicate that the current element field is an ASS element field.

For the control (control) field and the anchor channel information (AnCH Info) field, refer to the related descriptions in FIG. 7. Details are not described again. For specific meanings of the information shown in FIG. 8, refer to descriptions in the IEEE 802.11 series protocols.

The fields (for example, the anchor channel information field and the OBSS information field) in embodiments of this application may be designed as optional fields, or may be designed as non-fixed fields. In other words, the transmitter of the frame may determine, based on an actual situation, whether the sent frame includes these fields, to improve flexibility of the solution, and reduce bit overheads in load of the frame.

According to embodiments shown in FIG. 1, FIG. 2, FIG. 3, FIG. 4, FIG. 5, FIG. 6, FIG. 7, and FIG. 8 and the foregoing other content, FIG. 9 is a possible schematic flowchart of an example of a communication method according to an embodiment of this application. For related descriptions of a first non-AP STA, a first AP, and a second AP in FIG. 9, refer to the foregoing content in FIG. 3. Details are not described again.

As shown in FIG. 9, the method includes the following steps.

**Step 901:** Information indicating to request to enter a first mode is transmitted between the first non-AP STA and the first AP.

**Step 902:** Information indicating a success of entering the first mode is transmitted between the first non-AP STA and the first AP.

The first mode is defined in this embodiment of this application, and the first mode may also be referred to as an ASS mode.

It may also be understood that the first mode includes some rules, and a non-AP STA and/or an AP that enter the first mode need to comply with the rules of the first mode. The rules of the first mode may include: allowing the non-AP STA and/or the AP to switch a primary channel when the primary channel needs to be switched.

For example, the first mode indicates that the non-AP STA and/or the AP in the first mode is allowed to switch the primary channel. In other words, if the first non-AP STA and the first AP successfully enter the first mode through negotiation based on signaling, the first non-AP STA is allowed to switch the primary channel when determining that the primary channel needs to be switched, for example, switch the primary channel based on first TWT information. For a solution in which the first non-AP STA determines whether the primary channel needs to be switched, refer to the foregoing related implementations. Details are not described again.

Embodiments shown in FIG. 9, FIG. 3, and FIG. 6 may be separately implemented, or may be implemented in combination. For example, the implementations in FIG. 9 and FIG. 3 are combined. In the implementation shown in FIG. 9, for a solution in which the first AP and the first non-AP STA in the first mode determine whether to switch the primary channel, refer to the content shown in FIG. 3. Details are not described again. For a related example of combinations, refer to some descriptions in FIG. 9.

Step 901 may include a plurality of implementations, for example, Implementation C1 and Implementation C2 in the following. In Implementation C1, the first AP sends the information indicating to request to enter the first mode. Correspondingly, the first non-AP STA receives, from the first AP, the information indicating to request to enter the first mode. In Implementation C2, the first non-AP STA sends, to the first AP, the information indicating to request to enter the first mode. In step 902, the first non-AP STA sends, to the first AP, the information indicating a success of entering the first mode. The first AP may also send the information indicating a success of entering the first mode. Correspondingly, the first non-AP STA receives, from the first AP, the information indicating a success of entering the first mode. The following provides detailed descriptions by using Implementation C1 and Implementation C2.

**Implementation C1:** The first AP sends the information indicating to request to enter the first mode.

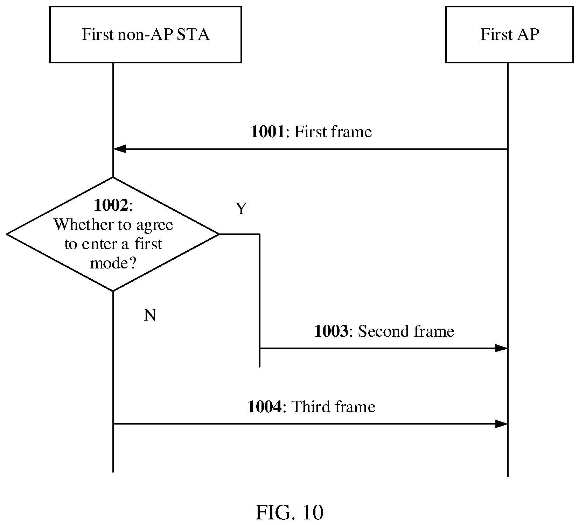

In Implementation C1, FIG. 10 is a possible schematic flowchart of an example of a communication method according to an embodiment of this application. For related descriptions of a first non-AP STA, a first AP, and a second AP in FIG. 10, refer to the foregoing content in FIG. 3. Details are not described again.

As shown in FIG. 10, the method includes the following steps.

**Step 1001:** The first AP sends a first frame.

Correspondingly, the first non-AP STA receives the first frame.

The first frame may include the information indicating to request to enter the first mode.

The first frame may also have another name, for example, may be referred to as an ASS initiation (initiation) frame. The ASS initiation (initiation) frame may include parameters (for example, all parameters) required by the first mode.

The embodiment provided in FIG. 9 may alternatively be used in combination with the embodiment in FIG. 6. In this case, the ASS initiation (initiation) frame (for example, the first frame) may include indication information of a second channel. The parameters required by the first mode may include the indication information of the second channel. The parameters required by the first mode may be carried in the anchor channel information field in FIG. 7 or FIG. 8. In a possible implementation, the indication information of the second channel may be understood as all the parameters required by the first mode.

**Step 1002:** Determine whether the first non-AP STA agrees to enter the first mode.

If the first non-AP STA agrees, step 1003 is performed.

If the first non-AP STA does not agree, step 1004 is performed.

**Step 1003:** The first non-AP STA sends a second frame.

Correspondingly, the first AP receives the second frame. Information in the second frame may indicate the first non-AP STA to enter the first mode, or indicate that the first non-AP STA successfully enters the first mode, or indicate that the first non-AP STA agrees to enter (or successfully enter) the first mode based on the parameters in the first frame.

The second frame may also have another name, for example, may be referred to as an ASS follow-up (follow-up) frame.

**Step 1004:** The first non-AP STA sends a third frame.

Correspondingly, the first AP receives the third frame. Information in the third frame may indicate that the first non-AP STA rejects to enter the first mode, or indicate that the first non-AP STA fails to enter the first mode, or indicate that the first non-AP STA does not agree to enter the first mode based on the parameters in the first frame.

The third frame may also have another name, for example, may also be referred to as an ASS follow-up (follow-up) frame.

**Implementation C2:** The first non-AP STA sends, to the first AP, the information indicating to request to enter the first mode.

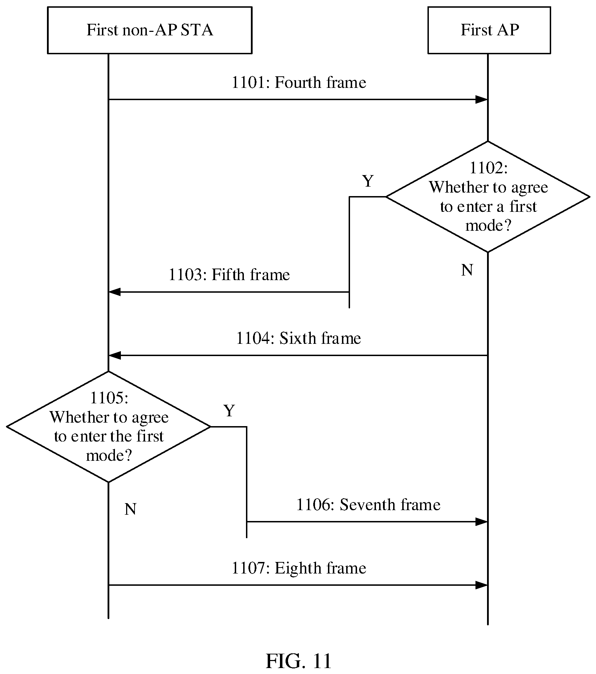

In Implementation C2, FIG. 11 is a possible schematic flowchart of an example of a communication method according to an embodiment of this application. For related descriptions of a first non-AP STA, a first AP, and a second AP in FIG. 11, refer to the foregoing content in FIG. 3. Details are not described again.

As shown in FIG. 11, the method includes the following steps.

**Step 1101:** The first non-AP STA sends a fourth frame.

Correspondingly, the first AP receives the fourth frame.

The fourth frame may include the information indicating to request to enter the first mode.

The fourth frame may also have another name, for example, may be referred to as an ASS initiation (initiation) frame. The ASS initiation (initiation) frame may include the parameters (for example, all parameters like the indication information of the second channel) required by the first mode. For more related content of the fourth frame, refer to the foregoing descriptions of the first frame. Details are not described again.

**Step 1102:** Determine whether the first AP agrees to enter the first mode.

If the first AP agrees, step 1103 is performed.

If the first AP does not agree, step 1104 is performed.

**Step 1103:** The first AP sends a fifth frame.

Correspondingly, the first non-AP STA receives the fifth frame. Information in the fifth frame may indicate the first AP to enter the first mode, or indicate that the first AP successfully enters the first mode, or indicate that the first AP agrees to enter (or successfully enter) the first mode based on the parameters in the first frame.

The fifth frame may also have another name, for example, may be referred to as an ASS follow-up (follow-up) frame.

**Step 1104:** The first AP sends a sixth frame.

Correspondingly, the first AP receives the sixth frame. Information in the sixth frame may indicate that the first AP does not agree to enter the first mode based on the parameters in the fourth frame.

The sixth frame may also have another name, for example, may also be referred to as an ASS follow-up (follow-up) frame.

In another possible implementation, the sixth frame further includes a parameter (for example, the anchor channel information) that is required by the first mode and that is recommended by the first AP. In this case, the flowchart shown in FIG. 11 may further include the following steps.

**Step 1105:** Determine, based on the parameter, in the sixth frame, required by the first mode, whether the first non-AP STA agrees to enter the first mode.

If the first non-AP STA agrees, step 1106 is performed.

If the first non-AP STA does not agree, step 1107 is performed.

**Step 1106:** The first non-AP STA sends a seventh frame.

Correspondingly, the first AP receives the seventh frame. Information in the seventh frame may indicate the first non-AP STA to enter the first mode, or indicate that the first non-AP STA successfully enters the first mode, or indicate that the first non-AP STA agrees to enter (or successfully enter) the first mode based on the parameters in the sixth frame.

The seventh frame may also have another name, for example, may be referred to as an ASS follow-up (follow-up) frame.

**Step 1107:** The first non-AP STA sends an eighth frame.

Correspondingly, the first AP receives the eighth frame. Information in the eighth frame may indicate that the first non-AP STA rejects to enter the first mode, or indicate that the first non-AP STA fails to enter the first mode, or indicate that the first non-AP STA does not agree to enter the first mode based on the parameters in the sixth frame.

The eighth frame may also have another name, for example, may also be referred to as an ASS follow-up (follow-up) frame.

After step 902, the first AP and the first non-AP STA successfully enter the first mode. After successfully entering the first mode, the first AP may send (for example, broadcast) information (for example, the first TWT information) about TWT set up between an AP in one or more OBSSs and a non-AP STA associated with the AP. The first non-AP STA may process the received information (for example, the first TWT information) about the TWT set up between the AP in the OBSS and the non-AP STA associated with the AP. For example, the first non-AP STA and the first AP may determine whether to perform communication, in an SP phase of the TWT set up between the AP in the OBSS and the non-AP STA associated with the AP, on the primary channel that is switched to. For this implementation, refer to the related implementation in FIG. 3. Details are not described again. The first TWT information may be sent after the first AP and the first non-AP STA successfully enter the first mode, or may be sent before the first AP and the first non-AP STA enter the first mode.

In another possible implementation, the first AP and the first non-AP STA switch the primary channel back to a first channel at end time of an SP of the TWT set up between the AP in the OBSS and the non-AP STA associated with the AP or in a time period before or after the end time.

For example, the first AP broadcasts both TWT #1 of an OBSS #1 and TWT #2 of an OBSS #2. An SP #1 of the TWT #1 is before an SP #2 of the TWT #2. The first non-AP STA and the first AP may switch the primary channel from the first channel to the second channel at start time of the SP of the TWT #1 of the OBSS #1 or in a time period before or after the start time, and perform communication on the second channel serving as the primary channel. The first AP and the first non-AP STA switch the primary channel back to the first channel at end time of the SP of the TWT #1 of the OBSS #1 or in a time period before or after the end time. Then, the first non-AP STA and the first AP may switch the primary channel from the first channel to the second channel at start time of an SP of the TWT #2 of the OBSS #2 or in a time period before or after the start time, and perform communication on the second channel serving as the primary channel. The first AP and the first non-AP STA switch the primary channel back to the first channel at end time of the SP of the TWT #2 of the OBSS #2 or in a time period before or after the end time.

In a possible implementation, after successfully entering the first mode, the first AP and the first non-AP STA may also update the parameter (for example, the anchor channel information) required by the first mode. For example, after entering the first mode, the first AP and the first non-AP STA may update an anchor channel to a third channel. Then, when determining that the primary channel needs to be switched, the first non-AP STA needs to switch the primary channel from the first channel to the third channel. Frames used to update the parameter required by the first mode may include an ASS initiation (initiation) frame and an ASS follow-up (follow-up) frame. The ASS initiation (initiation) frame may include the updated parameter required by the first mode, and the ASS follow-up (follow-up) frame may be used to determine whether to agree to perform a subsequent primary channel switching procedure based on the updated parameter required by the first mode. The ASS initiation (initiation) frame may be sent by the first AP or the first non-AP STA. Correspondingly, the ASS follow-up (follow-up) frame may be fed back by the first non-AP STA or the first AP based on the ASS initiation (initiation) frame. For a parameter update process, refer to the content shown in FIG. 10 and FIG. 11. Details are not described again.

**Step 903:** Information indicating to end the first mode is transmitted between the first non-AP STA and the first AP.

In step 903, when either the first AP or the first non-AP STA needs to exit the first mode, the information indicating to end the first mode may be sent. The information indicating to end the first mode may be carried in a frame, and the frame may be an ASS teardown (teardown) frame.

For example, the first non-AP STA sends, to the first AP, the information indicating to end the first mode. Correspondingly, the first AP receives, from the first non-AP STA, the information indicating to end the first mode. The first AP may further send an acknowledgment (acknowledgment, ACK) frame, to indicate that the first AP acknowledges exiting of the first mode.

For another example, the first AP may send the information indicating to end the first mode. Correspondingly, the first non-AP STA receives, from the first AP, the information indicating to end the first mode. The first non-AP STA may further send an acknowledgment frame, to indicate that the first non-AP STA acknowledges exiting of the first mode.

After the first non-AP STA and the first AP exit the first mode, that is, the first non-AP STA and the first AP are not in the first mode, the first non-AP STA and the first AP may not be restricted by the rules of the first mode. For example, when the first non-AP STA and the first AP are not in the first mode, even in an SP phase of TWT set up between an AP in an OBSS of the first AP and a non-AP STA associated with the AP, the first non-AP STA does not switch the primary channel, and still communicates with the first AP on the first channel serving as the primary channel.

In the embodiment shown in FIG. 9, all steps may be performed, or some steps may be performed. For example, any one or more of step 901, step 902, or step 903 may not be performed. For example, step 903 may not be performed. In this case, it may be considered by default that neither the first non-AP STA nor the first AP exits the first mode, or duration of the first mode may be set. For another example, step 902 may be performed. It is considered by default that an apparatus that receives the information in step 901 enters the first mode. For another example, step 901 may not be performed. In this case, it may be considered by default that the first non-AP STA and the first AP enter the first mode.

Formats of messages used to carry the information (for example, at least one of the information indicating to request to enter the first mode, the information indicating a success of entering the first mode, or the information indicating to end the first mode) in FIG. 9, FIG. 10, and FIG. 11 in embodiments of this application may have a plurality of structures, for example, the message may be an action (action) frame or a management frame.

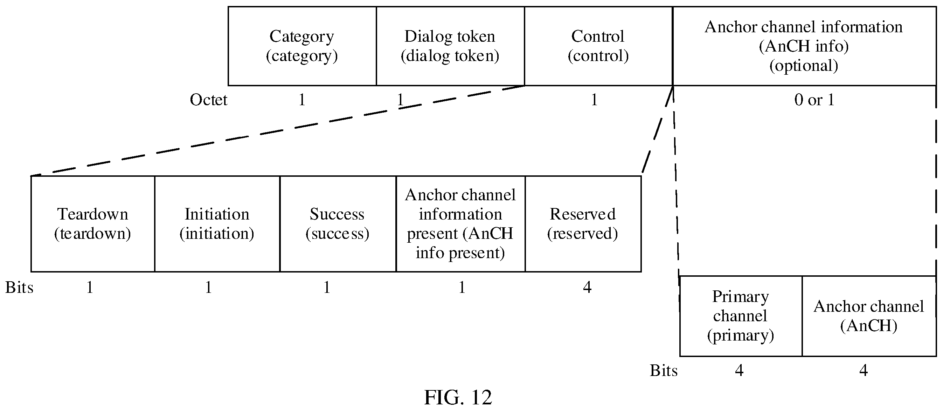

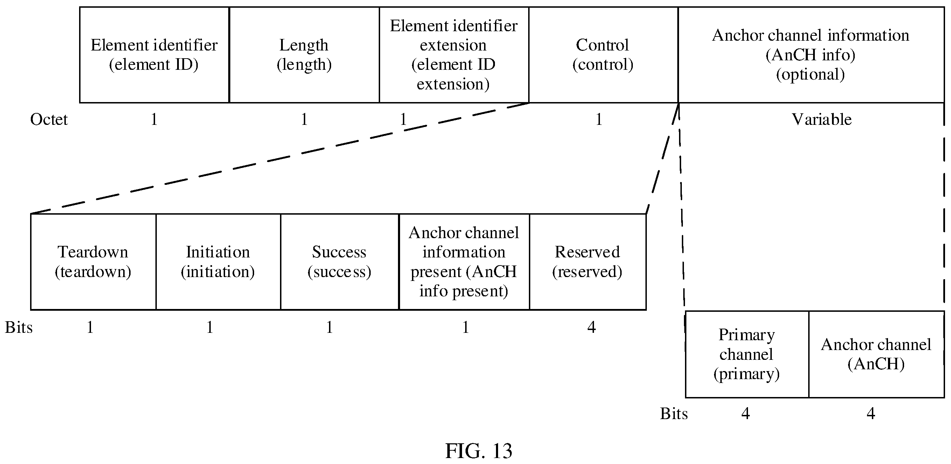

In a possible implementation, the information in FIG. 9, FIG. 10, and FIG. 11 may be carried in an ASS initiation (initiation) frame, an ASS follow-up (follow-up) frame, and an ASS teardown (teardown) frame. FIG. 12 and FIG. 13 are diagrams of examples of several possible frame formats.

Refer to FIG. 12. The frame is an action (action) frame or a management frame.

As shown in FIG. 12, the frame includes fields such as a category (category) field, a dialog token (dialog token) field, a control (control) field, and an anchor channel information (AnCH Info) field.

The category (category) field may be used to allocate a new category (category) value. The dialog token (dialog token) field may be used to identify a procedure (for example, a negotiation procedure) corresponding to the frame. Values carried in dialog token (dialog token) fields of frames in a same procedure may be the same. For example, values carried in dialog token fields of an ASS initiation (initiation) frame, an ASS follow-up (follow-up) frame, and an ASS teardown (teardown) frame in a procedure are the same. Therefore, the first AP and the first non-AP STA can determine which procedure each frame belongs to. The control (control) field is used to carry control information.

The control (control) field may include a teardown (teardown) field, an initiation (initiation) field, a success (success) field, and an anchor channel information present (AnCH Info present) field.

A value carried in the initiation (initiation) field of the frame indicates whether the frame is an initiation (initiation) frame. A value carried in the success (success) field of the frame indicates whether the frame is a success (success) frame. A value carried in the teardown (teardown) field of the frame indicates whether the frame is a teardown (teardown) frame.

For example, the frame is an initiation (initiation) frame. In this case, the value carried in the initiation (initiation) field of the frame may be set to 1. The success (success) field may be considered as a reserved field, and the value carried in the success field is not concerned by a receiver. The teardown (teardown) field may be set to 0.

For another example, the frame is an ASS follow-up (follow-up) frame, and the frame indicates a success of entering the first mode. In this case, the value carried in the success (success) field of the frame may be set to 1. Values carried in the teardown (teardown) field and the initiation (initiation) field may be set to 0. The anchor channel information present (AnCH Info present) field may be set to 0 or 1. Whether an anchor channel information (AnCH Info) field is present depends on the anchor channel information present (AnCH Info present) field. For example, when the anchor channel information present (AnCH Info present) field is 0, the anchor channel information (AnCH Info) field may not be present in the frame. For example, when the anchor channel information present (AnCH Info present) field is 1, the anchor channel information (AnCH Info) field may be present in the frame.

For another example, the frame is a teardown (teardown) frame. In this case, the value carried in the teardown (teardown) field of the frame may be set to 1. The success (success) field and the initiation (initiation) field may be considered as reserved bits, and values carried in the fields are not concerned by the receiver. In this example, remaining subfields of the control (control) field may be reserved, and the anchor channel information (AnCH Info) field may not be present in the frame. The dialog token (dialog token) field may also be reserved.

For content of the anchor channel information present (AnCH Info present) field, refer to related content in FIG. 7. Details are not described again. For specific meanings of the information shown in FIG. 12, refer to descriptions in the IEEE 802.11 series protocols.

FIG. 13 shows an element field in an action (action) frame or a management frame.

As shown in FIG. 13, the element includes fields such as an element identifier (element ID) field, a length (length) field, an element identifier extension (element ID extension) field, a control (control) field, and an anchor channel information (AnCH Info) field.

For the control (control) field and the anchor channel information (AnCH Info) field, refer to the related descriptions in FIG. 12. Details are not described again. For specific meanings of the information shown in FIG. 13, refer to descriptions in the FIG. 8 and the IEEE 802.11 series protocols.

It may be understood that, to implement the functions in the foregoing embodiments, the first AP and the first non-AP STA include corresponding hardware structures and/or software modules for performing the functions. A person skilled in the art should be easily aware that, with reference to units and method steps in the examples described in embodiments disclosed in this application, this application can be implemented by hardware or a combination of hardware and computer software. Whether a function is performed through hardware or hardware driven by computer software depends on particular application scenarios and design constraint conditions of the technical solutions.

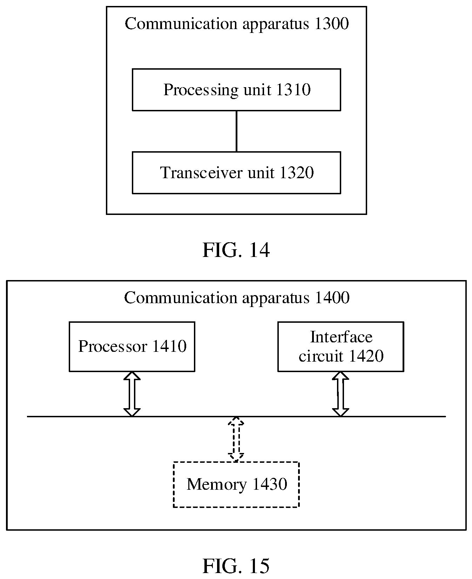

FIG. 14 and FIG. 15 are diagrams of structures of possible communication apparatuses according to embodiments of this application. These communication apparatuses may be configured to implement functions of the first non-AP STA or the first AP in the foregoing method embodiments, and therefore can also implement beneficial effect of the foregoing method embodiments. In this embodiment of this application, the communication apparatus may be the non-AP STA shown in FIG. 1, or may be the AP shown in FIG. 1, or may be a module (for example, a chip) used in the non-AP STA or the AP.

As shown in FIG. 14, a communication apparatus 1300 includes a processing unit 1310 and a transceiver unit 1320. The communication apparatus 1300 is configured to implement the functions of the first non-AP STA or the first AP in the method embodiment shown in FIG. 3, FIG. 6, FIG.9, FIG.10, or FIG. 11.

When the communication apparatus 1300 is configured to implement the functions of the first non-AP STA in the method embodiment shown in FIG. 3, the processing unit 1310 is configured to receive first TWT information from a first AP by using the transceiver unit 1320, and determine, based on first indication information, that TWT indicated by the first TWT information is TWT set up between an AP in an OBSS and a non-AP STA associated with the AP.

In a possible implementation, when the communication apparatus 1300 is configured to implement the functions of the first non-AP STA in the method embodiment shown in FIG. 3, the processing unit 1310 is configured to receive second TWT information from the first AP by using the transceiver unit 1320.

In a possible implementation, when the communication apparatus 1300 is configured to implement the functions of the first non-AP STA in the method embodiment shown in FIG. 3, the processing unit 1310 is configured to switch a primary channel from a first channel to a second channel based on the first TWT information, and communicate with the first AP on the second channel serving as the primary channel.

In a possible implementation, when the communication apparatus 1300 is configured to implement the functions of the first non-AP STA in the method embodiment shown in FIG. 3, the processing unit 1310 is configured to switch the primary channel from the second channel to the first channel, and communicate with the first AP on the first channel serving as the primary channel.

When the communication apparatus 1300 is configured to implement the functions of the first non-AP STA in the method embodiment shown in FIG. 6, the processing unit 1310 is configured to receive indication information of a second channel by using the transceiver unit 1320, and switch a primary channel from a first channel to the second channel, and communicate with the first AP on the second channel serving as the primary channel.

When the communication apparatus 1300 is configured to implement the functions of the first non-AP STA in the method embodiment shown in FIG. 9, FIG. 10, or FIG. 11, the processing unit 1310 uses the transceiver unit 1320 to send, to the first AP, information indicating to request to enter a first mode, or receive, from the first AP, information indicating to request to enter a first mode.

In a possible implementation, when the communication apparatus 1300 is configured to implement the functions of the first non-AP STA in the method embodiment shown in FIG. 9, FIG. 10, or FIG. 11, the processing unit 1310 uses the transceiver unit 1320 to send, to the first AP, information indicating a success of entering the first mode, or receive, from the first AP, information indicating a success of entering the first mode.

In a possible implementation, when the communication apparatus 1300 is configured to implement the functions of the first non-AP STA in the method embodiment shown in FIG. 9, FIG. 10, or FIG. 11, the processing unit 1310 uses the transceiver unit 1320 to send, to the first AP, information indicating to end the first mode, or receive, from the first AP, information indicating to end the first mode.

When the communication apparatus 1300 is configured to implement the functions of the first AP in the method embodiment shown in FIG. 3, the processing unit 1310 is configured to obtain first TWT information, and send the first TWT information by using the transceiver unit 1320.

In a possible implementation, when the communication apparatus 1300 is configured to implement the functions of the first AP in the method embodiment shown in FIG. 3, the processing unit 1310 is configured to send second TWT information by using the transceiver unit 1320.

In a possible implementation, when the communication apparatus 1300 is configured to implement the functions of the first AP in the method embodiment shown in FIG. 3, the processing unit 1310 is configured to switch a primary channel from a first channel to a second channel based on the first TWT information, and communicate with the first non-AP STA on the second channel serving as the primary channel.

In a possible implementation, when the communication apparatus 1300 is configured to implement the functions of the first AP in the method embodiment shown in FIG. 3, the processing unit 1310 is configured to switch the primary channel from the second channel to the first channel, and communicate with the first non-AP STA on the first channel serving as the primary channel.

When the communication apparatus 1300 is configured to implement the functions of the first AP in the method embodiment shown in FIG. 6, the processing unit 1310 is configured to send indication information of a second channel by using the transceiver unit 1320, and switch a primary channel from a first channel to the second channel, and communicate with the first non-AP STA on the second channel serving as the primary channel.

When the communication apparatus 1300 is configured to implement the functions of the first AP in the method embodiment shown in FIG. 9, FIG. 10, or FIG. 11, the processing unit 1310 uses the transceiver unit 1320 to send information indicating to request to enter a first mode, or receive information indicating to request to enter a first mode.

In a possible implementation, when the communication apparatus 1300 is configured to implement the functions of the first AP in the method embodiment shown in FIG. 9, FIG. 10, or FIG. 11, the processing unit 1310 uses the transceiver unit 1320 to send information indicating a success of entering the first mode, or receive information indicating a success of entering the first mode.

In a possible implementation, when the communication apparatus 1300 is configured to implement the functions of the first AP in the method embodiment shown in FIG. 9, FIG. 10, or FIG. 11, the processing unit 1310 uses the transceiver unit 1320 to send information indicating to end the first mode, or receive information indicating to end the first mode.

For more detailed descriptions of the processing unit 1310 and the transceiver unit 1320, refer to related descriptions in the method embodiment shown in FIG. 3, FIG. 6, FIG. 9, FIG. 10, or FIG. 11.

As shown in FIG. 15, a communication apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430, configured to: store instructions executed by the processor 1410, or store input data required for running instructions by the processor 1410, or store data generated after the processor 1410 runs instructions.

When the communication apparatus 1400 is configured to implement the method shown in FIG. 3, FIG. 6, FIG. 9, FIG. 10, or FIG. 11, the processor 1410 is configured to implement the functions of the processing unit 1310, and the interface circuit 1420 is configured to implement the functions of the transceiver unit 1320.

When the communication apparatus is a chip used in the first non-AP STA, the chip of the first non-AP STA implements functions of the first non-AP STA apparatus in the method embodiments. That the chip of the first non-AP STA receives information from a first AP may be understood as that the information is first received by another module (for example, a radio frequency module or an antenna) in the first non-AP STA, and then sent to the chip of the first non-AP STA by the modules. That the chip of the first non-AP STA sends information to the first AP may be understood as that the information is first sent to another module (for example, a radio frequency module or an antenna) in the first non-AP STA, and then sent to the first AP by the modules.

When the communication apparatus is a chip used in the first AP, the chip of the first AP implements functions of the first AP in the method embodiments. That the chip of the first AP receives information from a first non-AP STA may be understood as that the information is first received by another module (for example, a radio frequency module or an antenna) in the first AP, and then sent to the chip of the first AP by the modules. That the chip of the first AP sends information to the first non-AP STA may be understood as that the information is delivered to another module (for example, a radio frequency module or an antenna) in the first AP, and then sent to the first non-AP STA by the modules.

In this application, that an entity A sends information to an entity B may be that A directly sends the information to B, or may be that A indirectly sends the information to B via another entity. Similarly, that the entity B receives the information from the entity A may be that the entity B directly receives the information sent by the entity A, or may be that the entity B indirectly receives the information sent by the entity A via another entity. The entity A and the entity B herein may be the first AP or the first non-AP STA, or may be modules inside the first AP or the first non-AP STA. Information sending and receiving may be an information exchange between the first AP and the first non-AP STA, for example, an information exchange between the first AP and the first non-AP STA. Information sending and receiving may alternatively be an information exchange between two first APs, for example, an information exchange between a CU and a DU. Information sending and receiving may alternatively be an information exchange between different modules in an apparatus, for example, an information exchange between the chip of the first non-AP STA and another module of the first non-AP STA, or an information exchange between the chip of the first AP and another module of the first AP.

It should be understood that the processor in embodiments of this application may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The general-purpose processor may be a microprocessor or any regular processor or the like.

The method steps in embodiments of this application may be implemented by hardware, or may be implemented by the processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, to enable the processor to read information from the storage medium and write the information into the storage medium. The storage medium may alternatively be a component of the processor. The processor and the storage medium may be located in an ASIC. In addition, the ASIC may be located in the first AP or the first non-AP STA. The processor and the storage medium may alternatively exist in the first AP or the first non-AP STA as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers (for example, numeric numbers such as "first" and "second", or letter numbers such as "parameter A", "parameter B", and "parameter C") in embodiments of this application are merely for distinguishing for ease of description, and are not intended to limit the scope of embodiments of this application. Sequential numbers of the foregoing processes do not mean execution sequences. The execution sequences of the processes should be determined based on functions and internal logic of the processes.

## Claims

1. A communication method, comprising:
receiving, by a first non-access point station non-AP STA, first target wake time TWT information from a first access point AP, wherein the first non-AP STA is associated with the first AP, the first TWT information comprises first indication information, and the first indication information indicates that TWT indicated by the first TWT information is TWT set up between an AP in an overlapping basic service set OBSS of the first AP and a non-AP STA associated with the AP; and
determining, by the first non-AP STA based on the first indication information, that the TWT indicated by the first TWT information is the TWT set up between the AP in the OBSS and the non-AP STA associated with the AP.

2. The method according to claim 1, wherein the first TWT information is carried in a first TWT element, and the first indication information is carried in a reserved field B7 in a control field of the first TWT element.

3. The method according to claim 1 or 2, wherein the first TWT information further comprises third indication information; and
the third indication information indicates the first non-AP STA to communicate with the first AP on a primary channel that is switched to.

4. The method according to claim 3, wherein the first TWT information is carried in the first TWT element, and the third indication information is carried in a TWT parameter information field of the first TWT element.

5. The method according to any one of claims 1 to 4, wherein the first TWT information further comprises fourth indication information; and
the fourth indication information indicates the first non-AP STA to communicate with the first AP on a primary channel that is switched to when a state of the first channel is a busy state.

6. The method according to claim 5, wherein the first TWT information is carried in the first TWT element; and
the fourth indication information is carried in the TWT parameter information field of the first TWT element.

7. The method according to any one of claims 1 to 6, wherein the method further comprises:
switching, by the first non-AP STA, a primary channel from a first channel to a second channel based on the first TWT information, and communicating with the first AP on the second channel serving as the primary channel, wherein
start time of switching the primary channel from the first channel to the second channel is start time of an SP of the first TWT or is before start time of an SP of the first TWT; and/or
completion time of switching the primary channel from the first channel to the second channel is the start time of the SP of the first TWT or is before the start time of the SP of the first TWT.

8. The method according to claim 7, wherein after switching, by the first non-AP STA, the primary channel from the first channel to the second channel based on the first TWT information, and communicating with the first AP on the second channel serving as the primary channel, the method further comprises:
switching, by the first non-AP STA, the primary channel from the second channel to the first channel, and communicating with the first AP on the first channel serving as the primary channel, wherein
start time of switching the primary channel from the second channel to the first channel is end time of the SP of the first TWT or is after end time of the SP of the first TWT; and/or
completion time of switching the primary channel from the second channel to the first channel is the end time of the SP of the first TWT or is after the end time of the SP of the first TWT.

9. The method according to claim 7 or 8, wherein the method further comprises:
obtaining, by the first non-AP STA, indication information of the second channel.

10. The method according to any one of claims 1 to 9, wherein the method further comprises:
sending, by the first non-AP STA to the first AP, information indicating to request to enter a first mode; or
receiving, by the first non-AP STA from the first AP, the information indicating to request to enter the first mode, wherein
the first mode indicates that a non-AP STA and/or an AP in the first mode is allowed to switch the primary channel based on the first TWT information.

11. The method according to claim 10, wherein the method further comprises:
sending, by the first non-AP STA to the first AP, information indicating a success of entering the first mode; or
receiving, by the first non-AP STA from the first AP, the information indicating a success of entering the first mode.

12. The method according to claim 10 or 11, wherein the method further comprises:
sending, by the first non-AP STA to the first AP, information indicating to end the first mode; or
receiving, by the first non-AP STA from the first AP, the information indicating to end the first mode.

13. A communication method, comprising:
obtaining, by a first access point AP, first target wake time TWT information, wherein a first non-access point station non-AP STA is associated with the first AP, the first TWT information comprises first indication information, and the first indication information indicates that TWT indicated by the first TWT information is TWT set up between an AP in an overlapping basic service set OBSS of the first AP and a non-AP STA associated with the AP; and
sending, by the first AP, the first TWT information.

14. The method according to claim 13, wherein the first TWT information is carried in a first TWT element; and
the first indication information is carried in a reserved field B7 in a control field of the first TWT element.

15. The method according to claim 13 or 14, wherein the first TWT information further comprises third indication information; and
the third indication information indicates the first AP to communicate with the first non-AP STA on a primary channel that is switched to.

16. The method according to claim 15, wherein the first TWT information is carried in the first TWT element; and
the third indication information is carried in a TWT parameter information field of the first TWT element.

17. The method according to any one of claims 13 to 16, wherein the first TWT information further comprises fourth indication information; and
the fourth indication information indicates the first AP to communicate with the first non-AP STA on a primary channel that is switched to when a state of a first channel is a busy state.

18. The method according to claim 17, wherein the first TWT information is carried in the first TWT element; and
the fourth indication information is carried in the TWT parameter information field of the first TWT element.

19. The method according to any one of claims 13 to 18, wherein the method further comprises:
switching, by the first AP, the primary channel from the first channel to a second channel based on the first TWT information, and communicating with the first non-AP STA on the second channel serving as the primary channel, wherein
start time of switching the primary channel from the first channel to the second channel is start time of an SP of the first TWT or is before start time of an SP of the first TWT; and/or
completion time of switching the primary channel from the first channel to the second channel is the start time of the SP of the first TWT or is before the start time of the SP of the first TWT.

20. The method according to claim 19, wherein after switching, by the first AP, the primary channel from the first channel to the second channel based on the first TWT information, and communicating with the first non-AP STA on the second channel serving as the primary channel, the method further comprises:
switching, by the first AP, the primary channel from the second channel to the first channel, and communicating with the first non-AP STA on the first channel serving as the primary channel, wherein
start time of switching the primary channel from the second channel to the first channel is end time of the SP of the first TWT or is after end time of the SP of the first TWT; and/or
completion time of switching the primary channel from the second channel to the first channel is the end time of the SP of the first TWT or is after the end time of the SP of the first TWT.

21. The method according to claim 19 or 20, wherein the method further comprises:
sending, by the first AP, indication information of the second channel.

22. The method according to any one of claims 13 to 21, wherein the method further comprises:
sending, by the first AP, information indicating to request to enter the first mode; or
receiving, by the first AP, the information indicating to request to enter a first mode, wherein
the first mode indicates that a non-AP STA and/or an AP in the first mode is allowed to switch the primary channel based on the first TWT information.

23. The method according to claim 22, wherein the method further comprises:
sending, by the first AP, information indicating a success of entering the first mode; or
receiving, by the first AP, the information indicating a success of entering the first mode.

24. The method according to claim 22 or 23, wherein the method further comprises:
sending, by the first AP, information indicating to end the first mode; or
receiving, by the first AP, the information indicating to end the first mode.

25. A communication apparatus, comprising a module configured to perform the method according to any one of claims 1 to 12 or a module configured to perform the method according to any one of claims 13 to 24.

26. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 12 or the method according to any one of claims 13 to 24 by using a logic circuit or by executing code instructions.

27. A computer-readable storage medium, wherein the storage medium stores a computer program or instructions, and when the computer program or the instructions are executed by a communication apparatus, the method according to any one of claims 1 to 12 or the method according to any one of claims 13 to 24 is implemented.

28. A chip system, wherein the chip system comprises at least one processor and an interface circuit, the interface circuit and the at least one processor are interconnected by using a line, and the processor performs the method according to any one of claims 1 to 12 or the method according to any one of claims 13 to 24 by running instructions.

29. A computer program product, wherein the computer program product stores a computer program, the computer program comprises program instructions, and when the program instructions are executed by a computer, the computer is enabled to perform the method according to any one of claims 1 to 12 or the method according to any one of claims 13 to 24.
